Europäisches Patentamt

(19) European Patent Office

Office européen des brevets

(11) EP 0 690 778 B1

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(21) Anmeldenummer: **94911072.0**

(22) Anmeldetag: **19.03.1994**

(51) Int. Cl.$^6$: **B29C 45/78**, B29C 45/73

(86) Internationale Anmeldenummer:
**PCT/DE94/00334**

(87) Internationale Veröffentlichungsnummer:
**WO 94/22656** (13.10.1994 Gazette 1994/23)

(54) **VERFAHREN UND ANLAGE ZUR TEMPERIERUNG VON FORMWERKZEUGEN FÜR DIE KUNSTSTOFFVERARBEITUNG**

PROCESS AND INSTALLATION FOR TEMPERING MOULDING TOOLS FOR PLASTICS

PROCEDE ET INSTALLATION D'ADAPTATION DE LA TEMPERATURE D'OUTILS DE MOULAGE POUR MATIERES PLASTIQUES

(84) Benannte Vertragsstaaten:
**AT BE CH DE DK ES FR GB GR IT LI NL PT SE**

(30) Priorität: **26.03.1993 DE 4309880**
**23.02.1994 DE 4405711**

(43) Veröffentlichungstag der Anmeldung:
**10.01.1996 Patentblatt 1996/02**

(73) Patentinhaber: **Kunststofftechnik F.u.H.**
**Riesselmann GmbH**
**D-01458 Ottendorf-Okrilla (DE)**

(72) Erfinder: **LIEHR, Erich**
**D-01458 Hermsdorf (DE)**

(74) Vertreter: **Tragsdorf, Bodo, Dipl.-Ing.**
**Patentanwalt**
**Heinrich-Heine-Str. 3**
**06844 Dessau (DE)**

(56) Entgegenhaltungen:
EP-A- 0 218 919          WO-A-92/08598
CH-A- 484 711

- **PLASTVERARBEITER, Bd.35, Nr.5, Mai 1984, SPEYER, BRD Seiten 74 - 81 W. KOTZAB 'Exakte Temperierung bei geringem Kostenaufwand' in der Anmeldung erwähnt**
- **PATENT ABSTRACTS OF JAPAN vol. 13, no. 193 (M-822) 9. Mai 1989 & JP,A,01 018 620 (KOMATSU LTD) 23. Januar 1989**
- **PATENT ABSTRACTS OF JAPAN vol. 12, no. 164 (M-698) 18. Mai 1988 & JP,A,62 279 917 (NISSEI PLASTICS IND CO) 4. Dezember 1987**
- **PATENT ABSTRACTS OF JAPAN vol. 14, no. 373 (M-1009) (4316) 13. August 1990 & JP,A,02 136 219 (JAPAN STEEL WORKS LTD) 24. Mai 1990**
- **KUNSTSTOFFBERATER, Bd.30, Nr.6, Juni 1985, MüNCHEN, DEUTSCHLAND Seiten 22 - 25 'FACHBEITRAG : Formtemperierung durch Temperaturmessung am Spritzgiesswerkzeug'**
- **PATENT ABSTRACTS OF JAPAN vol. 11, no. 295 (M-626) 24. September 1987 & JP,A,62 085 916 (NISSEI PLASTICS IND CO) 20. April 1987**

## Beschreibung

Die Erfindung betrifft ein Verfahren zur Temperierung von Formwerkzeugen für die Kunststoffverarbeitung, insbesondere von Spritzgießwerkzeugen, sowie eine Anlage zur Durchführung des Verfahrens.

Beim Spritzgießen ist die Werkzeugtemperatur neben der Zylinder- und Schmelzetemperatur eine der wichtigsten thermischen Funktionsgrößen. Sie übt einen großen Einfluß auf die Fließfähigkeit der Kunststoffschmelze, die Zykluszeit und die Qualität der Formteile, insbesondere die Oberflächengüte, die Schwindung und den Verzug aus. Es sind bereits verschiedene Verfahren zum Temperieren von Spritzgießwerkzeugen bekannt.

In der Praxis konnte sich bisher nur die Arbeitsweise mit Temperiergeräten durchsetzen. Eine erste Variante besteht darin, das Temperiergerät in der Spritzgießmaschine unterzubringen (Plaste und Kautschuk 1982, Heft 2, S. 86). Das Temperiergerät befindet sich somit in unmittelbarer Werkzeugnähe, um Wärmeverluste durch das Leitungssystem zu vermeiden. Diese Lösung führt zu einem geringen Platzbedarf für die Aufstellung der Spritzgießmaschine, die grundlegenden Nachteile dieses Temperierverfahrens bleiben jedoch bestehen. Das sind vor allem die energetisch ungünstige Arbeitsweise und die hohen Anschaffungskosten für die Temperiergeräte.

Aus der DD-PS 203 011 ist ein Verfahren bekannt, bei dem die Kühlphase nach dem Einspritzvorgang unterbrochen wird, danach eine Temperphase erfolgt und sich daran eine erneute Kühlphase anschließt, die so lange andauern soll, bis der Restenergiegehalt des Formteiles ausreicht, um das Spritzgießwerkzeug auf eine für den nachfolgenden Spritzgießzyklus günstige Temperatur zu enwärmen.

Der Nachteil dieses Verfahrens besteht vor allem darin, daß technologisch bedingte Unterschiede in der Wärmeabfuhr der einzelnen Kühlphasen zu Beginn des Fertigungsprozesses manuell durch unterschiedliche Drosselung des Kühlwasserstromes an den Stellventilen oder durch Variationen der Einstellung stellbarer Zeitrelais die Dauer der Kühlphasen abgestimmt werden müssen. Dies erfordert einen erheblichen Arbeitsaufwand und stellt an das Bedienpersonal erhöhte Anforderungen. Außerdem können mit diesem Verfahren, ebenso wie bei den konventionellen Temperiergeräten, unvermeidbare Störungen des Fertigungsablaufes wie z.B. Kühlwassertemperatur- und Kühlwasserdurchsatzschwankungen, Änderungen hinsichtlich der Temperatur, insbesondere der Temperatur der Schmelze, und der Zykluszeit, in ihrer energetischen Auswirkung auf die Formteilqualität nicht ausgeregelt werden. In Abhängigkeit von der Größe der energetischen Wirkung dieser Störgrößen kann sich der thermodynamische Zustand des Werkzeuges mehr oder weniger stark ändern und bei den hergestellten Formteilen können Qualitätsunterschiede auftreten, die zu Ausschuß führen.

In der US-PS 4,420,446 ist ein Verfahren zur Werkzeugtemperaturkontrolle beim Spritzgießen beschrieben. Dabei wird eine ausgewählte Kontrolltemperatur als Solltemperatur vorgegeben. Die Werkzeugtemperatur wird in unmittelbarer Nähe des Formnestes gemessen. In Abhängigkeit vom Über- bzw. Unterschreiten der Solltemperatur werden die Ventile des Kühlkreislaufes geöffnet bzw. geschlossen.

Zusätzlich werden bei Über- bzw. Unterschreiten vorgegebener oberer und unterer Grenztemperaturen optische und akustische Warnsignale abgegeben.

Eine ähnliche Lösung, bei der die mit der Schmelze zugeführte Warme zum Temperieren der Werkzeugwand ausgenutzt werden soll, ist in der Zeitschrift "Plastverarbeiter" 1984, Heft 5, S. 77 bis 80 beschrieben. Die Temperierung wird dabei durch einen Mikroprozessor gesteuert, über einen Thermosensor wird an der Werkzeugkontur die durch die Einbringung der Schmelze hervorgerufene Temperaturerhöhung gemessen und der Mikroprozessor regelt (in Abhängigkeit davon) die Öffnungszeit des Magnetventilsystems für die Kühlwasserzufuhr. Es findet eine sogenannte Impulskühlung statt und das Werkzeug übernimmt die Funktion des Wärmetauschers.

Aus der EP 0 218 919 B 1 ist ein Verfahren zur Eichung und Korrektur der Vorrichtung zur Werkzeugtemperierung bei Spritzgießmaschinen bekannt, bei dem ein Rechner das Schließen und Öffnen der Ventile als Funktion eines Temperaturunterschiedes in den Formwerkzeugen nach einer Meßperiode mit maximal geöffneten Ventilen und einer Meßperiode mit geschlossenen Ventilen steuert. Nach Erreichen der Solltemperaturen werden zwei Eichzyklen durchgeführt, in denen das Streckverhalten des Werkzeuges durch den gemessenen Temperaturabfall bzw. -anstieg getestet wird. Ausgehend von den ermittelten Temperaturdifferenzen errechnet der Rechner die Öffnungszeiten der Ventile, um die vorgegebene Solltemperatur einzuhalten.

Die Temperierung erfolgt nur in Abhängigkeit von der momentan gemessenen Werkzeugtemperatur.

Diese bekannten, auf dem gleichen Prinzip basierenden Verfahren, haben folgende Nachteile.

Die große Nähe der Temperaturfühler zur Werkzeugkontur, also zur heißesten Zone des Werkzeuges, führen notwendigerweise bei jedem Einspritzvorgang, auch beim Anfahren zu einer Überschreitung der Solltemperatur und damit zur Auslösung der Kühlung.

Die Temperierung in alleiniger Abhängigkeit von der momentan gemessenen Temperatur führt bei einer immer vorhandenen Trägheit des thermischen Ausgleichs zwischen Schmelze und Werkzeug, sowie zwischen Kühlmedium und Werkzeug zu einer zeitlichen Verschiebung der Werkzeugtemperierung und damit zu Werkzeugtemperaturen, die deutlich unterhalb bzw. oberhalb der gewählten Kontrolltemperatur liegen.

Sowohl Störgrößen im Spritzgießprozeß, z.B. ein vermindertes Temperiermedienangebot, als auch die ungünstige Lage von Kühlflächen zur Werkzeugkontur bei komplizierten Werkzeugen, werden durch diese Verfahren nicht kompensiert, eine Anpassung der Temperierbedingungen an die momentanen Prozeßparameter ist nicht möglich. Gegenüber dem konventionellen Temperierprozeß können die Ausschußquote, die Zykluszeit und der Energieverbrauch nicht gesenkt werden.

Außerdem ist ein Verfahren bekannt (WO 92/08598), bei dem entweder die Werkzeugtemperatur oder die Rücklauftemperatur des Temperiermediums nach festgelegten Intervallen in jedem Zyklus gemessen werden und das arithmetische Mittel oder ein vergleichbarer Wert dieser Temperaturen gebildet wird. Überschreitet die mittlere Temperatur eine in Abhängigkeit zur Solltemperatur stehende obere bzw. unterschreitet sie eine untere Grenztemperatur oder signalisieren die mittleren Temperaturen mehrerer aufeinanderfolgender Zyklen einen ansteigenden oder abfallenden Trend in Bezug auf die Solltemperatur, so wird die Zeitdauer der Kühlung im Folgezyklus reguliert. Die Kühldauer selbst soll abhängig sein von der "Rate" der Temperaturänderung bzw. der Größe der Differenz zum akzeptierten Temperaturbereich. Die Temperierung kann mittels einer Schaltuhr an den Maschinenzyklus gekoppelt werden. Der Nachteil dieses Verfahrens besteht vor allem darin, daß die Kühlung auf den unmittelbaren Vorgängerzyklus bezogen ist und immer unabhängig von der momentanen Isttemperatur im Werkzeug geregelt wird. Akut wirkende Störgrößen werden erst nachträglich und über den relativ trägen Mechanismus einer mittleren Temperatur ausgeregelt. Dadurch folgt die beschriebene Regelung im allgemeinen und bei wirkenden Störgrößen im besonderen der tatsächlichen Werkzeugtemperatur mit beachtlichem zeitlichem Verzug, wodurch die beabsichtigte Prozeßstabilität nicht gewährleistet ist.

Außerdem fehlen zur praktischen Umsetzung des Verfahrens notwendige Angaben zur Lage des Temperaturmeßortes. Auf Grund der diskontinuierlichen Arbeitsweise des Spritzgießverfahrens und der daraus resultierenden ständigen Veränderung des Temperaturfaldes in Abhängigkeit von Meßort und Zeit ist eine erfolgversprechende Durchführung des Verfahrens bei einer willkürlichen Festlegung des Meßortes nicht immer gewährleistet. Ferner ist in dieser Druckschritt keine Berechnungsvorschrift für die Ermittlung der Öffnungsdauer der Magnetventile, also für die eigentliche Temperierdauer im Zyklus, angegeben.

Der Erfindung lag die Aufgabe zugrunde, ein Verfahren zur Temperierung von Formwerkzeugen in der Kunststoffverarbeitung, insbesondere von Spritzgießwerkzeugen, zu schaffen, das unter Berücksichtigung der momentanen Parameter des Spritzgießvorganges, einschließlich auftretender Störungen des Prozesses, eine hinreichend gute Anpassung der mittleren Werkzeugtemperatur an eine vorzugebende Solltemperatur bei gleichzeitig selbsteinstellender Regelung gewährleistet und das ohne zusätzliche Energie arbeitet. Ferner soll bei vorgegebenen Solltemperaturen, die außerhalb des möglichen Regelbereiches liegen, eine selbsttätige Korrektur der Solltemperaturen, auf einen Wert innerhalb des Regelbereiches ermöglicht werden. Weiterhin ist es Aufgabe der Erfindung, eine zur Durchführung des Verfahrens geeignete Anlage zu schaffen.

Erfindungsgemäß wird die Aufgabe dadurch gelöst, daß der Temperierprozeß in zwei Phasen, eine Anfahrphase und eine stationäre Betriebsphase, mit jeweils unterschiedlichen Temperierbedingungen getrennt wird, wobei die Anfahrphase nach dem erstmaligen Erreichen oder Überschreiten der vorgegebenen Werkzeugsolltemperatur beendet ist, und während der gesamten Zyklusdauer kontinuierlich die mittlere Werkzeugtemperatur an dem für den betreffenden Kühlkreislauf, thermisch sowohl von der eingespritzen Schmelze als auch der Kühlung gleichwertig beaufschlagten Ort gemessen wird, wobei dieser Ort sich im Bereich der geometrischen Mitte zwischen Formteilkontur und Kühlkanälen bzw. -Kühlfläche und im Bereich der Mitte zwischen Kühlwassereingang und -Kühlwasserausgang in einem hinreichend großem Abstand zur Formteilkontur befindet, und zum Zeitpunkt $Z_1$, der durch ein Signal der Maschinenablaufsteuerung festgelegt wird, ein Kühlmittelimpuls, der die Temperierung in den zurückliegenden Zyklen berücksichtigt, in zeitlicher Nähe des Einspritzvorganges eingeleitet wird, um im Zeitbereich der größten Temperaturdifferenz zwischen eingespritzter Schmelze und Kühlkanal die erforderliche Wärmeableitung zu bewirken und weitere Kühlmittelimpulse als Resultat eines bis zu einem Zeitpunkt $Z_2$ stattfindenden Soll-Ist-Vergleichs bei Überschreitung der vorgegebenen Solltemperatur eingeleitet werden, wobei der Zeitpunkt $Z_2$ durch ein Signal der Maschinenablaufsteuerung festgelegt wird, das zu einem definierten Zeitpunkt in zeitlicher Nähe des Zyklusendes ausgelöst wird.

In der Anfahrphase erfolgt im ersten Zyklus, zum Zeitpunkt $Z_1$ beginnend, eine initialkühlung $t_{init}$ mit festgelegter Dauer, um eine erste vollständige Durchspülung des betreffenden Kühlkreislaufes zu erzielen und beim Erreichen eines definierten Abstandes der mittleren Werkzeugtemperatur zur vorgegebenen Solltemperatur wird im Folgezyklus zum Zeitpunkt $Z_1$ ein Festkühlimpuls $t_{ann}$ geringerer zeitlicher Dauer eingeleitet, wobei der Kühlimpuls $t_{ann}$ in allen nachfolgenden Zyklen bis zur erstmaligen Überschreitung der vorgegebenen Solltemperatur eingeleitet wird und ein gedämpftes Annähern der mittleren Werkzeugtemperatur an die gewählte Solltemperatur gewährleistet.

Eine als Sonderfall in der Anfahrphase auftretende Variante besteht darin, daß bei Vorgabe einer Solltemperatur, die unter der gemessenen Isttemperatur in allen nachfolgenden Zyklen zwischen den Zeitpunkten $Z_1$ und $Z_2$ so lange eine ständige Kühlung erfolgt, bis die gemessene Isttemperatur die vorgegebene Solltemperatur erstmalig unterschreitet. Nach Unterschreitung der Solltemperetur wird die Anfahrphase mit der Einleitung des Kühlmittelimpulses der Dauer $t_{ann}$ zum Zeitpunkt $Z_1$ des auf die erste Unterschreitung folgenden Zyklus fortgesetzt und mit der erneuten Überschreitung der Solltemperatur beendet.

In der stationären Betriebsphase findet das erfindungsgemäße Verfahren mit seiner adaptiven oder "selbsteinstellenden" Regelung seinen Niederschlag einerseits in der ständig aktualisierten Vorgabe eines errechneten Kühlmittelimpulses und andererseits in einer vom aktuellen Soll-Istwert-Vergleich abhängigen Temperierphase.

Aus der Gesamtdauer der Kühlmittelimpulse einer festgelegten Anzahl unmittelbar vorausgegangener Zyklen wird über eine angeschlossene Recheneinheit das arithmetische Mittel der Kühldauer je Zyklus ermittelt, mit einem Faktor $K_1$, der die praktisch unvermeidbar auftretenden thermischen Störungen auf den Temperaturzustand des Werkzeuges kompensiert, bewertet und als errechnete Impulsdauer $t_E$ für die Einleitung des Kühlmittels im Folgezyklus zum Zeitpunkt $Z_1$ genutzt.

Nach Einleitung des Kühlmittelimpulses der Länge $t_E$ erfolgt im Ergebnis des kontinuierlich durchgeführten Soll-Ist-Vergleiches der Werkzeugtemperatur für die Dauer der jeweiligen Solltemperaturüberschreitung und damit temperaturabhängig spätestens bis zum Zeitpunkt $Z_2$ des aktuellen Zyklus die Einleitung weiterer Kühlmittelimpulse, deren Gesamtdauer durch die errechnete maximale Gesamtdauer $t_{max}$ begrenzt ist.

Die Zeitdauer dieses Kühlimpulses der Länge $t_E$ wird nach der Berechnungsformel

$$t_E = \frac{K1(j)}{n} * \sum_{i=1}^{n} (t_{Ei} + t_{Vi}) \tag{I}$$

ermittelt wobei,

$n$      die vorgegebene Anzahl von aufeinanderfolgenden Zyklen deren Gesamtkühldauer nach erstmaliger Überschreitung der vorgegebenen Werkzeugsolltemperatur in die Berechnung von $t_E$ einbezogen werden soll,

$t_{Ei}$      der für den Zyklus i der n Zyklen errechnete Kühlimpuls,

$t_{Vi}$      die Summe der temperaturabhängigen Kühlimpulse des Zyklus i der n Zyklen

$j$      die Zykluszahl nach Beginn der Phase des stationären Betriebes und

$K1 (j)$      die von j abhängige maschinen- und verfahrensabhängige Größe, die zur Bewertung der mittleren Kühlzeit aus den n Zyklen dient und die folgenden Bedingungen genügt:

$$K1 (j) = a_0 + a_1 * j \qquad \text{für } j \leq n$$

$$K1 (j) = a_2 \qquad \text{für } j > n$$

$$K1 (j) < 1, \; K1 (j + 1) \geq K1 (j) \qquad \text{für alle } j$$

$$a_0, a_1, a_2 > 0,$$

das heißt, $K_1 (j)$ genügt einer Geradengleichung für $j \leq n$ mit $a_1$ als Anstieg, $a_0$ konstantem Glied und im Bereich $j \leq n + 1$ streng monoton wachsendem Verlauf, für $j > n$ ist $K_1(j)$ konstant $a_2$, wobei gilt, $a_2 > a_0 + a_1 * j$ für $j \leq n$ und gewährleistet ist, daß die Summe der Kühlimpulse bis zum Zyklus n schwächer gewichtet in die Berechnung von $t_E$ eingeht als nach Erreichen von n,

bedeuten und folgende Anfangsbedingungen ab Zyklus 1 der stationären Phase für die Berechnung gelten:

(1) $t_{Ei} = t_{ann}$
(2) Die Berechnung von (I) erfolgt für $j < n$, indem n durch j ersetzt wird.

Die möglichen temperaturabhängigen Kühlimpulse je Zyklus werden durch eine maximale Gesamtdauer $t_{max}$ zeitlich begrenzt. Die maximale Gesamtdauer $t_{max}$ korreliert mit der errechneten Impulsdauer $t_E$ in folgender Weise:

$$t_{max} = K2 * t_E$$

wobei gilt:

K2      eine Konstante, die der Bedingung

$$( 1 - K1(j) ) < K2 \leq 3, \qquad K2 = \text{const. für alle } j$$

genügt und

$$t_E = \frac{K1(j)}{n} * \sum_{i=1}^{n} (t_{Ei} + t_{Vi})$$

bedeuten.

Diese in ständiger Korrelation zur Vorgeschichte der Temperierung der vorangegangenen n Zyklen stehende maximale Kühldauer $t_{max}$ für den aktuellen Zyklus verhindert als zeitliche Grenze der temperaturabhängigen Kühlimpulsdauer Impulslängen, die in den Folgezyklen zu einer Unterschreitung der Solltemperatur führen könnten. impulslängen solcherart werden u.a. möglich durch eine eventuelle nicht optimale Lage der Temperaturfühler, die eine Trägheit der Messung der Temperaturverhältnisse am Meßort und damit der Reaktion darauf, bewirkt.

Erstmalig wird die Zeitschranke $t_{max}$ im zweiten Zyklus nach der Erstüberschreitung von $T_{soll}$ wirksam, da erst für diesen Zyklus ein errechneter Temperierimpuls $t_E$ vorliegt. Im Extremfall kann die Kühldauer für den ersten Zyklus nach Solltemperaturüberschreitung identisch sein mit der Zeitspanne von $Z_1$ bis $Z_2$.

Die mit der errechneten Impulslänge korrelierende maximale Gesamtdauer $t_{max}$ der temperaturabhängigen Kühlimpulse bringt gleichzeitig eine kühlkreisspezifische Komponente in die Kühlung ein, da auf Grund der beschriebenen Berechnung eine Einbeziehung von Kühlkreisverlauf, Temperaturfühlerlage, Medientemperatur, -volumen u.a. erfolgt. Das Verfahren ermöglicht es, daß dann, wenn die Werkzeugtemperatur zum Zeitpunkt $Z_2$ einer festzulegenden Anzahl aufeinanderfolgenden Zyklen höher als die vorgegebene Solltemperatur $T_{soll}$ ist, d.h. wenn die zur Verfügung stehende Zeitspanne zwischen $Z_1$ und $Z_2$ nicht genügt, um die Werkzeugtemperatur am Meßort auf die vorgegebene Solltemperatur zu kühlen, vom Steuergerät die Meldung "Solltemperatur zu niedrig" für den betreffenden Kühlkreis abgesetzt wird. Entsprechend erfolgt die Meldung "Solltemperatur zu hoch" wenn die Anfahrphase nach einer festzulegenden Anzahl von Zyklen nicht beendet ist, d.h. nach dieser Anzahl von Zyklen ist noch keine Überschreitung der gewählten Solltemperatur eingetreten.

Hinsichtlich der Signale aus der Maschinenablaufsteuerung, die für die Zeitpunkte $Z_1$ und $Z_2$ herangezogen werden, gibt es z.B. folgende Möglichkeiten.

Als Zeitpunkt $Z_1$ wird der Beginn der Nachdruckzeit und als $Z_2$ das Ende der Werkzeugöffnung gewählt oder als Zeitpunkt $Z_1$ der Beginn des Einspritzvorganges und als $Z_2$ das Ende der Werkzeugöffnung oder der Zeitpunkt $Z_1$ und der Zeitpunkt $Z_2$ werden durch die gleichen Signale der Maschinenablaufsteuerung festgelegt, wobei in diesem Fall $Z_2$ mit dem Signal $Z_1$ des Folgezyklus identisch ist.

Gemäß einer weiteren Ausgestaltung des erfindungsgemäßen Verfahrens werden außerhalb des möglichen Regelbereiches vorgegebene Solltemperaturen wie folgt korrigiert.

Nach einer festgelegten Anzahl $n_{Fehl}$ von Maschinenzyklen, in denen die betreffende Werkzeugisttemperatur ständig oberhalb bzw. ständig unterhalb der vorgegebenen Solltemperatur $T_{soll}$ geblieben ist, wird eine Fehlermeldung abgesetzt, in deren Folge durch Prüfung der mittleren Temperaturdifferenz $T_{Diff}$ zu einem definierten Zeitpunkt $Z_D$ im Maschinenzyklus bei $n_D$ aufeinanderfolgenden Zyklen die Grenztemperatur in Richtung der vorgegebenen Solltemperatur ermittelt wird, wobei die Grenztemperatur hinreichend genau ermittelt ist, wenn die mittlere Temperaturdifferenz $T_{Diff}$ zum Zeitpunkt $Z_D$ bei $n_D$ aufeinanderfolgenden Zyklen nicht größer als ein Temperaturwert $T_K$ ist.

Tritt der Fall ein, daß die ermittelte Grenztemperatur unterhalb der vorgegebenen Solltemperatur $T_{soll}$ liegt, so wird die Grenztemperatur um einen Temperaturwert $T_U$ nach unten korrigiert und als neue Solitemperatur $T_{soll-korr}$ eingesetzt und der verfahrensgebundene Regelparameter $t_{ann}$ mittels eines Falltors von 0,2 bis 0,8 angepaßt. Liegt die ermittelte Grenztemperatur oberhalb der vorgegebenen Solltemperatur $T_{soll}$, so wird die Kühldauer im Zyklus verlängert, wobei das die Temperierung beendende Signal $Z_2$ aus der Ablaufsteuerung der Spritzgießmaschine ignoriert und gleich $Z_1$ des Folgezyklus gesetzt wird. Reicht die Kühlzeitverlängerung nicht aus, so wird die ermittelte Grenztemperatur um einen Temperaturwert $T_O$ nach oben korrigiert und als Solltemperatur $T_{soll-korr}$ eingesetzt.

Als definierter Zeitpunkt $Z_D$ im Maschinenzyklus kann jeder beliebige Zeitpunkt gewählt werden, bevorzugt werden dabei solche Signale aus der Maschinenablaufsteuerung, die bereits anliegen, wie z.B. Beginn des Einspritzvorganges, Beginn oder Ende der Nachdruckzeit und Ende der Werkzeugöffnung. Bei einem stabilen Prozeßverlauf und gleichbleibender Temperierung (auf Grund der Grenzfindung wird entweder durchgängig gekühlt oder nicht) ist der Temperaturverlauf über dem Zyklus bei gefundener Grenztemperatur über mehrere Zyklen nahezu identisch, so daß der Zeitpunkt für die Ermittlung der Differenz bedeutungslos ist, aus technischer Sicht, wird ein Zeitpunkt gewählt, der für das Verfahren von Bedeutung ist. Die festzulegende Anzahl $n_{Fehl}$ an Zyklen bis zur Fehlermeidung soll in einem Bereich von 10 bis 30 liegen und ist abhängig von der Schwankungsbreite der Prozeßparameter. Bei einem normalerweise sehr stabilen Prozeß kann eine kleinere Anzahl $n_{Fehl}$ festgelegt werden. Die Zyklusanzahl $n_D$ für die Ermittlung der mittleren Temperaturdifferenz soll in einem Bereich von 2 bis 30 liegen, wobei bei einer kleinen Anzahl an Zyklen mit einem größeren Einfluß von Zufallsgrößen zu rechnen ist. Bei einer größeren Anzahl an Zyklen ist die Zeitkomponente bis zur Auslösung einer Reaktion durch das Verfahren von Bedeutung. Der Temperaturwert $T_K$ stellt eine absolute Schranke für die mittlere Temperaturdifferenz dar, bei deren Unterschreitung vom Erreichen der Grenztemperatur ausgegangen werden kann. Ein sinnvoller Wert für den Temperaturwert $T_K$ liegt in einem Bereich von größer Null bis kleiner 1 K. Der Temperaturwert $T_U$ soll in einem Bereich von 0,5 bis 2 K liegen und der Temperaturwert $T_O$ in einem Bereich von 1 bis 5 K.

Durch diese weitere Ausgestaltung des Verfahrens kann dessen Zuverlässigkeit verbessert werden. Bei einer Vorgabe von Solltemperaturen, die außerhalb des Regelbereiches liegen, werden diese ohne Eingriff des Bedienpersonals selbsttätig korrigiert. Diese sogenannte Selbstfindung der Regelgrenzen ermöglicht, die Ausschußquote beim Spritzgießen weiter zu senken. Auch manuelle Fehler können bei einer falschen Eingabe der Solltemperaturen dadurch korrigiert werden.

Ein weiterer Vorteil kann auch darin gesehen werden, daß es dem Bediener möglich ist, für bestimmte Einsatzfälle die Grenztemperaturen zu ermitteln, innerhalb derer das Verfahren anwendbar ist.

Der Ablauf zur Selbstfindung der Regelgrenzen ist folgender. Dam Temperiersystem ist für einen Kühlkreislauf eine Werkzeugsolltemperatur vorgegeben werden, die auf Grund der gegebenen Umstände, wie z.B. Temperiermedientemperatur, Temperiermedienvolumenstrom oder Schmelzetemperatur nicht zu erreichen ist. Nach einer festgelegten Anzahl $n_{Fehl}$ von Maschinenzyklen, in denen die betreffende Werkzeugisttemperatur ständig oberhalb bzw. ständig unterhalb der vorgegebenen Solltemperatur $T_{soll}$ geblieben ist, setzt das Temperiersystem über ein angeschlossenes Display eine entsprechende Fehlermeldung ab. Danach beginnt das Regelsystem die Grenztemperatur in Richtung der vorgegebenen Solltemperatur zu suchen. Dabei wird die Werkzeugisttemperatur zu einem definierten Zeltpunkt $Z_D$ im Spritzgießzyklus gemessen und die mittlere Tempraturdifferenz $T_{Diff}$ bei $n_D$ aufeinanderfolgenden Zyklen errechnet. Die Grenztemperatur gilt als hinreichend genau ermittelt, wenn die mittlere Temperaturdifferenz $T_{Diff}$ zum Zeitpunkt $Z_D$ bei $n_D$ aufeinanderfolgenden Zyklen kleiner als ein vorgegebener Temperaturwert $T_K$ ist. Liegt die ermittelte Grenztemperatur unterhalb der vorgegebenen Solltemperatur $T_{soll}$, wird diese Grenztemperatur um einen Temperaturkorrekturbetrag $T_U$ nach unten korrigiert und als neue Solltemperatur $T_{soll-korr}$ eingesetzt, dabei wird gleichzeitig der verfahrensgebundene Regelparameter $t_{ann}$ gekürzt.

Liegt die Grenztemperatur oberhalb der nicht erreichbaren Solltemperatur $T_{soll}$, so wird die mögliche Kühldauer im Zyklus verlängert, das die Temperierung beendende Signal $Z_2$ aus der Ablaufsteuerung der Spritzgießmaschine wird ignoriert und gleich dem Signal $Z_1$ des Folgezyklus gesetzt. Genügt diese Kühlzeitverlängerung nicht, um die vorgegebene Solltemperatur $T_{soll}$ zu erreichen, wird die sich in der Folge einstellende Grenztemperatur um einen Temperaturwert $T_O$ nach oben korrigiert und als Solltemperatur $T_{soll-korr}$ eingesetzt.

In beiden Grenzfällen ist das Verfahren in der Lage, die neu vorgegebene Solltemperatur $T_{soll-korr}$ einzuhalten und auftretende Störgrößen im Spritzgießprozeß auszuregeln.

Durch das erfindungsgemäße Temperierverfahren wird die Prozeßstabilität beim Spritzgießen wesentlich erhöht. Die Ausschußquote kann gegenüber der konventionellen Temperiermethode um bis zu 35 % gesenkt werden. Zykluszeitverkürzungen von ca. 5 % bis 15 % führen zu einer beachtlichen Produktivitätssteigerung. Temperiergeräte werden nur benötigt, wenn hohe Kühlmedientemperaturen erforderlich sind. Infolgedessen verringert sich der spezifische Energieverbrauch des Spritzgießprozesses um ca. 10 % bis 20 %.

Die Anlage zur Durchführung des Verfahrens weist ein Steuergerät das in den Spritzgießvorgang, die Temperaturmessung und die Temperiermedienstromregulierung eingebunden ist.

Dazu besteht das Steuergerät aus einer Anpaßstufe zur Anpassung der thermischen Signale entsprechend der gewählten Sensoren und Übertragungsmittel an einen nachgeschalteten Analog-Digital-Umwandler ADU zur Umwandlung der thermischen Signale in elektrische Signale, einem Rechnerkern CPU zur Errechnung der erforderlichen Durchflußdauer des Temperiermediums im jeweiligen Kühlkreislauf ($K_1$ .... $K_m$) in Abhängigkeit vom Temperiergeschehen der zurückliegenden Zyklen und der momentan gemessenen Temperatur und zur Ausgabe von Schaltsignalen zu Beginn und Ende des Temperiermediendurchflusses an das Stellglied ($M_1$ .... $M_m$) des jeweiligen Temperierkreislaufes, einer Eingabeeinheit zur Eingabe von Signalen aus der Ablaufsteuerung der Spritzgießmaschine und einer Ausgabeeinheit für die Bedienerführung und einer Schnittstelle zur Druckerprotokollierung des Temperiergeschehens.

Die Erfindung soll im folgenden näher erläutert werden. In der zugehörigen Zeichnung zeigen

Fig. 1      ein Funktionsschaltbild und
Fig. 2      einen vereinfachten Ablaufplan zu dem erfindungsgemäßen Verfahren.

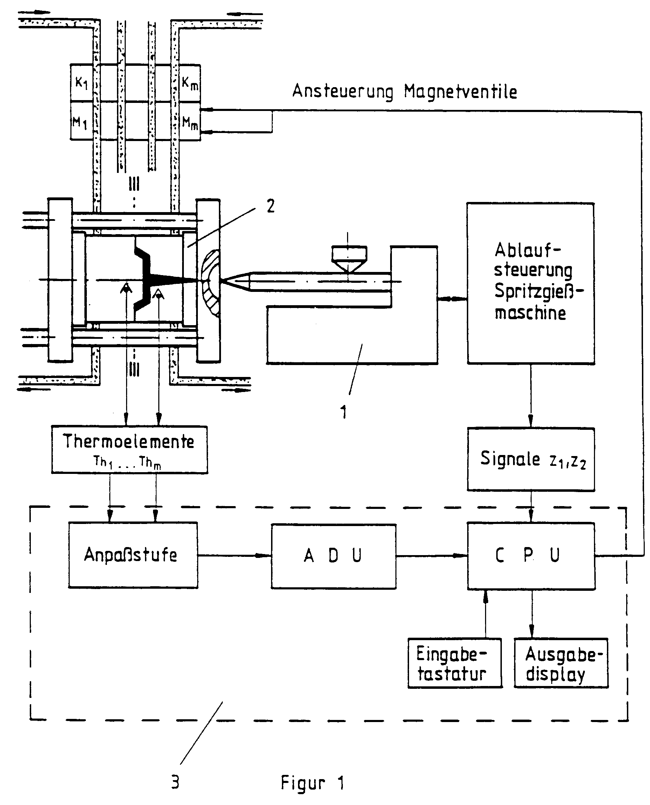

In dem Funktionsschaltbild gemäß Fig. 1 ist eine Spritzgießmaschine 1 mit einem Spritzgießwerkzeug 2 dargestellt.

Die Temperierung des Spritzgießwerkzeuges 2 erfolgt über Kühlwasserkreisläufe $K_1$ bis $K_m$ wobei der Durchfluß des Kühlwassers für jeden Kühlwasserkreislauf mittels der Magnetventile $M_1$ bis $M_m$ unterbrochen oder freigegeben werden kann.

Das Steuergerät 3 zur Werkzeugtemperierung besteht aus den Baugruppen Anpaßstufe, Analog-Digitalumwandler (ADU), Recheneinheit (CPU), Eingabeeinheit, Ausgabeeinheit und verschiedenen Schnittstellen. Die funktionelle Einbindung der einzelnen Baugruppen in dieses Gerät und damit in das System Spritzgießvorgang, Temperaturmessung und Anpassung des Temperiermedienstromes ist folgende:

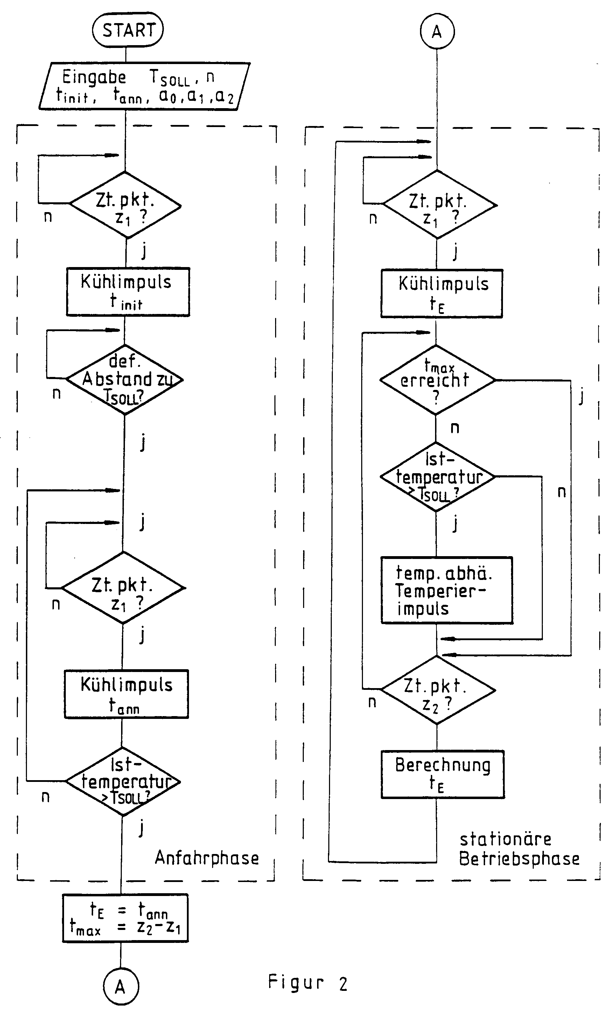

Je Kühlkreislauf $K_i$ (i=1,.....,m) des Spritzgießwerkzeuges wird an einem, thermisch sowohl durch die eingespritzte Schmelze als auch durch die Kühlung gleichwertig beaufschlagten Meßwort, möglichst im Bereich der geometrischen Mitte zwischen Formteilkontur und Kühlkanal bzw. -fläche und im Bereich der Mitte zwischen Kühlmitteleingang und Kühlmittelausgang, ein Thermosensor $Th_i$ (i=1,.....,m) in das Werkzeug eingebracht, der flexibel mit der Anpaßstufe des Steuergerätes verbunden ist. Durch die Anpaßstufe werden die anliegenden thermischen Signale entsprechend der gewählten Sensoren und Übertragungsmaterialien an den angeschlossenen Analog-Digital-Umwandler (ADU) angepaßt. Dieser übermittelt die empfangenen thermischen Signale als elektrische Signale an eine Recheneinheit (CPU), auf der wie nachfolgend unter Bezugnahme auf Fig. 2 erläutert, verarbeitet werden. Dabei bestimmt die auf der CPU installierte Software, ausgehend von der Temperaturentwicklung in einer festgelegten Anzahl zurückliegender Zyklen und der momentan gemessenen Temperatur, die Zeiten, für die der Durchfluß des Temperiermediums im jeweiligen Kühlkreislauf freigegeben wird.

Beginn und Ende des Temperiermediendurchflusses legt die CPU durch Ausgabe von Schaltsignalen an das Magnetventil des jeweiligen Kühlkreises fest. Die Zuordenbarkeit von Meßwerten, Rechenergebnissen und Kühlkreisen ist gewährleistet.

An die CPU gleichfalls angeschlossen sind eine Eingabeeinheit zur Eingabe der Stellgrößen und eine Ausgabeeinheit für die Bedienerführung. In die CPU eingeleitete Signale $Z_1$ und $Z_2$ aus der Ablaufsteuerung der Spritzgießmaschine liefern die zeitlichen Bezüge zum Spritzgießprozeß.

Der in der Fig. 2 dargestellte Ablaufplan gilt in seiner Abfolge für jeden einzelnen der zu regelnden Kühlkreisläufe und läuft in zyklischer Folge für jeden dieser Kühlkreisläufe ab. Mit der Eingabe der Solltemperatur über die Eingabetastatur des Steuergerätes wird die Werkzeugtemperierung gestartet. Die Anfahrphase beginnt mit dem ersten Maschinenzyklus nach dem Start. Das Signal "Zeitpunkt $Z_1$" der Ablaufsteuerung der Spritzgießmaschine löst die Einleitung des Erstimpulses $t_{init}$ aus.

Im weiteren Ablauf wird ein ständiger Vergleich zwischen Isttempratur und vorgegebener Solltemperatur so lange durchgeführt, bis ein definierter Abstand zur Solltemperatur erreicht ist. In dem diesem Ereignis folgenden Maschinenzyklen wird nach Empfang des Signals "Zeitpunkt $Z_1$" der Kühlimpuls der Länge $t_{ann}$ eingeleitet. Diese Einleitung zu diesem Zeitpunkt wiederholt sich in allen nachfolgenden Zyklen des Spritzgießvorganges bei ständigem Soll-Ist-Temperaturvergleich und wird ebenfalls in dem Zyklus durchgeführt, in welchem die vorgegebene Solltemperatur $T_{soll}$ erstmalig überschritten wird. Mit Überschreitung der Solltemperatur endet die Anfahrphase. Im ersten Zyklus der stationären Betriebsphase wird der Kühlimpuls der Länge $t_{ann}$ nach Empfang des Maschinensignals "Zeitpunkt $Z_1$" als Anfangswert für den errechneten Impuls $t_E$ letztmalig eingeleitet, als mögliche temperaturabhängige Temperierdauer für den ersten Zyklus der stationären Betriebsphase wird die gesamte Zeitspanne zwischen $Z_1$ und $Z_2$ vorgegeben. Ergibt der Soll-Ist-Temperaturvergleich nach Einleitung des errechneten Impulses eine andauernde bzw. erneute Überschreitung der vorgegebenen Solltemperatur $T_{soll}$, so werden für die Dauer der Solltemperaturüberschreitung, aber höchstens bis zur Gesamtdauer $t_{max}$, ein oder mehrere temperaturabhängige Temperierimpulse eingeleitet.

Spätestens mit dem Maschinensignal "Zeitpunkt $Z_2$" wird das zugehörige Magnetventil geschlossen und die Errechnung des impulses $t_E$ sowie der zeitlichen Obergrenze $t_{max}$ für die möglichen temperaturabhängigen Temperierimpulse für den Folgezyklus beginnt. Mit der Einleitung des Impulses $t_E$, d.h. mit der Ventilöffnung für die Dauer $t_E$ zum Zeitpunkt $Z_1$ des Folgezyklus wird die Temperierung fortgesetzt.

Beispiel 1

Auf einer Spritzgießmaschine vom Typ Billion 650 wird ein Automobilteil aus ABS, Novodur PMT-S hergestellt. Die verfahrenstechnischen Parameter sind folgende:

| - Masse eines Schusses (2 Formteile + Anguß) | 0,920 kg |
|---|---|
| - Werkzeugmasse | 3200 kg |
| - Spritzdruck | 500 bar |
| - Einspritzzeit | 3,2 s |
| - Schließkraft | 6000 kN |
| - Nachdruck | 400 bar |
| - Nachdruckzeit | 7 s |

Das Spritzgießwerkzeug ist mit vier Kühlkreisläufen ausgerüstet, die über Temperaturfühler mit der Steuereinheit gekoppelt sind.

Als Werkzeugsolltemperatur $T_{soll}$ werden für die Kühlkreise $K_1$ und $K_2$ (Düsenseite) 50° C und für die Kühlkreise $K_3$ und $K_4$ (Fahrseite) 45° C vorgegeben.

Die Werkzeugtemperaturen im Bereich der betreffenden Kühlkreisläufe werden in der geometrischen Mitte zwischen Kühlkanal und Formkontur und in der Mitte zwischen Kühlwassereingang und -ausgang des jeweiligen Kreises gemessen.

Am Beispiel des Kühlkreises $K_1$ soll die Art und Weise der Einbringung der sensoraufnehmenden Bohrung beschrieben werden. In der Mitte zwischen Kühlmitteleingang und Kühlmittelausgang wird die Bohrung zwischen zwei zueinander und zur Werkzeugkontur parallel verlaufende Kühlkanäle in der geometrischen Mitte zwischen beiden Kanälen und senkrecht zur Werkzeugkontur eingebracht. Die Bohrung endet im halben Abstand zwischen Kühlkanal und Werkzeugkontur vor der Werkzeugkontur. Die für den Kühlkreis $K_1$ konkreten Maße sind folgende:

| - Mittenabstand zwischen beiden Kühlkanälen | 40 mm |
|---|---|
| - Abstand zwischen Kühlkanalmitte und Kontur | 40 mm |
| - Abstand zwischen Bohrungsgrund und Kontur | 20 mm. |

Die für die Temperaturmessung notwendigen Bohrungen für die Kühlkreise $K_2$, $K_3$ und $K_4$ wurden analog zu Kreis $K_1$ eingebracht.

Die Messungen erfolgen kontinuierlich über die gesamte Zyklusdauer. Als Reaktion auf die gemessenen Werte werden Kühlmittelimpulse begrenzter zeitlicher Dauer in den zugehörigen Kühlkreislauf eingeleitet.

Im ersten Zyklus der Anfahrphase erfolgt, zum Zeitpunkt $Z_1$ ("Beginn Nachdruck") beginnend, eine initialkühlung festgelegter Dauer $t_{init}$ mit der eine erste vollständige Durchspülung des betreffenden Kühlkreises erzielt wird. Die Dauer der Initialkühlung $t_{init}$ wird jeweils empirisch aus vorliegenden Erfahrungswerten festgelegt, wobei für dieses Beispiel 5 Sekunden als ausreichend angesehen werden.

Im Folgezyklus erfolgt bei Erreichen eines definierten Abstandes der gemessenen mittleren Werkzeugtemperatur zu den vorgegebenen Solltemperaturen von 3 K in den jeweiligen Kühlkreisläufen zum Zeitpunkt $Z_1$ ("Beginn Nachdruck") die Einleitung eines Festkühlimpulses $t_{ann}$ über eine Zeitdauer von 0,3 Sekunden. Dieser Kühlimpuls von 0,3 Sekunden wird in allen nachfolgenden Zyklen bis zur erstmaligen Überschreitung der vorgegebenen Solltemperatur eingeleitet. Mit Erreichen bzw. Überschreiten der Solltemperatur wird die Anfahrphase als abgeschlossen betrachtet und es folgt die stationäre Betriebsphase. In dieser wird zum Zeitpunkt $Z_1$ ein Kühlmittelimpuls $t_E$ eingeleitet, der als Mittelwert aus der Gesamtkühldauer der vorhergehenden drei Zyklen errechnet und mit einem Faktor K1 bewertet wird, nach der Formel

$$t_E = \frac{K1\,(j)}{n} * \sum_{i=1}^{n} (t_{Ei} + t_{Vi})$$

mit n = 3, wobei für K1(j) gilt:

$$K1(j) = a_0 + a_1 * j \qquad \text{für } j \leq 3$$

$$K1(j) = a_2 \qquad \text{für } j > 3$$

$$K1(j) < 1 \qquad \text{für } j > 0$$

Unter Beachtung der thermischen Trägheit der Wärmeübertragungsvorgänge zu Beginn der stationären Betriebsphase und der daraus häufig resultierenden "Überschwingvorgänge" in der Temperaturregelung wurden für die Konstanten $a_0$, $a_1$ und $a_2$ folgende Werte gewählt:

$$a_0 = 0,3; \qquad a_1 = 0,1; \qquad a_2 = 0,75;$$

Für K1(j) ergibt sich ein monoton wachsender Verlauf in Abhängigkeit von j, der gewährleistet, daß erst nach Erreichen der für die Berechnung von $t_E$ notwendigen Zykluszahl n innerhalb der stationären Phase eine Bewertung des Temperierzeitmittels im allgemein gültigen Maße erfolgt.

Unter Berücksichtigung der Anzahl der vorangegangenen Zyklen und der Summe aus errechneten und temperaturabhängigen Kühlimpulsen im jeweiligen Zyklus wird eine Kühlimpulsdauer $t_E$ berechnet. Für jeden Zyklus wird $t_E$ über einen Rechner neu berechnet und die so ermittelte Kühlimpulsdauer ausgelöst.

Aus den Rechenergebnissen werden beispielhaft die Werte $t_E$ und für den 21., 30., 50. und 70. Zyklus der Kühlkreisläufe $K_1$ und $K_4$ angegeben.

Im Ergebnis da kontinuierlich stattfindenden Soll-ist-Vergleiches werden bei Überschreitung der vorgegebenen Solltemperatur bis zum Zeitpunkt $Z_2$, dem "Ende der Werkzeugöffnung" einer oder mehrere temperaturabhängige Kühlimpulse mit einer maximalen Zeitdauer je Zyklus, die nach der Formel $t_{max} = K2 * t_E$ berechnet wird, eingeleitet.

Im vorliegenden Fall ist K2 = 1,5 und es ergeben sich die in der nachfolgenden Tabelle angegebenen Werte für den 21., 30., 50. und 70. Zyklus.

Temperierimpulsdauer (in Sekunden) und die gemessene Werkzeugtemperatur (in °C) für den Kühlkreislauf $K_1$ (Solltemperatur 50° C) und den Kühlkreislauf $K_4$ (Solltemperatur 45° C):

| Lfd. Zyklus | Temperatur zum Zeitpunkt $Z_1$ | | errechnete Impulsdauer $t_E$ | | temperaturabhängige Impulsdauer $t_V$ | | Temperatur z. Zeitpunkt $Z_2$ | |
|---|---|---|---|---|---|---|---|---|
| | Kühlkreislauf | | | | | | | |
| | $K_1$ | $K_4$ | $K_1$ | $K_4$ | $K_1$ | $K_4$ | $K_1$ | $K_4$ |
| 21 | 49,7 | 45,1 | 6,0 | 3,6 | 1,5 | 1,4 | 49,8 | 44,8 |
| 30 | 50,0 | 45,3 | 5,1 | 4,0 | 2,5 | 2,0 | 49,9 | 45,0 |
| 50 | 49,8 | 45,2 | 5,2 | 3,3 | 1,7 | 1,8 | 50,0 | 45,0 |
| 70 | 50,0 | 45,1 | 5,4 | 4,6 | 1.9 | 1,5 | 50,1 | 44,8 |

Alle Kühlkreisläufe werden mit Brauchwasser aus dem geschlossenen Kühlwassernetz des Betriebes gespeist, das im Vorlauf eine Temperatur von 14° C aufweist. Dar Einsatz eines Temperiergerätes ist nicht erforderlich.

Nach der erfindungsgemäßen Verfahrensweise wurden im Dauerbetrieb die eingangs genannten Formteile qualitätsgerecht in einer Zykluszeit von 43 s hergestellt. Die ermittelte Ausschußquote betrug 2,6 % und der spezifische Energieverbrauch lag bei 0,59 KWh/kg.

Bezogen auf den Kühlkreis 4 wird im folgenden die Selbstfindung der Regelgrenzen bei einer zu hoch angegebenen Solltemperatur erläutert. Für den Kühlkreis 4 (Fahrseite) wurde vom Bediener eine Solltemperatur von 80° C vorgegeben.

Im ersten Zyklus der Anfahrphase arbeitet das Temperiersystem verfahrensgemäß, d.h., zum Zeitpunkt $Z_1$ ("Beginn Nachdruck") beginnend, erfolgt eine Initialkühlung festgelegter Dauer $t_{init}$ mit der eine erste vollständige Durchspülung der Kühlkreise erzielt wird. Im weiteren Verlauf werden die Kühlkreise 1, 2, 3 und 4 verfahrensgemäß, gesteuert, d.h. bis zu einer Temperatur von $T_{soll}$ - 3 K erfolgt keine Kühlung. Nach 6 bis 8 Zyklen hat die Temperatur in den Kreisen 1, 2 und 3 die Anfahrgrenze und nach weiteren zwei Zyklen die Solltemperatur $T_{soll}$ überschritten, damit ist für diese Werkzeugbereiche die Anfahrphase beendet und die stationäre Betriebsphase beginnt. Kreis 4 bleibt infolge zu hoch angegebener Solltemperatur ohne Kühlung. Während einer festgelegten Zyklusanzahl $n_{Fehl}$ = 20 wird versucht, durch weiteres Aussetzen der Kühlung für den Kreis 4, die vorgegebene Solltemperatur $T_{soll}$ zu erreichen. Da die Warmezufuhr zum Meßort nicht ausreichend ist, um die vorgegebene Solltemperatur von 80° C zu erreichen, wird nach 20 Zyklen über das Display der Anlage eine entsprechende Fehlermeidung ausgegeben.

Im Folgezyklus beginnt das System die Grenztemperatur $T_{max}$ in Richtung der vorgegebenen Solltemperatur zu suchen. Dazu wird die Werkzeugisttemperatur zum Zeitpunkt $Z_D$ "Ende der Werkzeugöffnung" ($Z_D = Z_2$) gemessen und die mittlere Temperaturdifferenz einer Anzahl von 5 aufeinanderfolgenden Zyklen ($n_D$) ermittelt. Die Grenztemperatur $T_{max}$ gilt dann als hinreichend genau, wenn die mittlere Temperaturdifferenz $T_{Diff}$ zum Zeitpunkt $Z_D$ "Ende der Werkzeugöffnung" bei 5 aufeinanderfolgenden Zyklen ($n_D$) kleiner als ein vorgegebener Temperaturwert $T_K$ von 0,5 K ist.

27 Zyklen nach Anfahrbeginn betrug die mittlere Temperaturdifferenz 0,45 K und die Werkzeugisttemperatur zum Zeitpunkt $Z_D$ "Ende der Werkzeugöffnung" 72° C.

Diese Grenztemperatur wurde um den Korrekturwert $T_U$ = 1 K von 72° C auf 71° C korrigiert, und als neue Solitemperatur $T_{soll-korr}$ in das Temperiersystem eingetragen und dem Bediener kenntlich gemacht. Gleichzeitig wurde die Anfahrimpulsdauer $t_{ann}$ angepaßt und als erster Impuls der stationären Betriebsphase für eine Zeitdauer von 0,1 Sekunden ausgelöst (Anpassung von 0,3 auf 0,1 Sekunden).

Beispiel 2

Auf einer Spritzgießmaschine vom Typ Klöckner Ferromatic FM 85 werden Relaisgehäuse mit 30 %iger Glasfaserverstärkung hergestellt. Die verfahrenstechnischen Parameter sind folgende:

| | |
|---|---|
| - Masse des Schusses (2 Formteile + Anguß) | 0,130 kg |
| - Werkzeugmasse | 270 kg |
| - Spritzdruck | 1200 bar |
| - Einspritzzeit | 0,7 s |
| - Schließkraft | 850 kN |
| - Nachdruck (abgestuft) | 1000 bar |
| - Nachdruckzeit | 6 s |

Der Verfahrensablauf ist analog wie im Beispiel 1, wobei jedoch folgende Unterschiede auftreten.

Bedingt durch den erforderlichen hohen Wärmebedarf des Kühlmediums Wasser (Medientemperatur 75° C) ist es erforderlich, ein zweikreisiges Temperiergerät einzusetzen, um die geforderte Werkzeugtemperatur aufrechtzuerhalten.

Für die beiden Kreise des Temperiergerätes wurden als Solltemperatur $T_{soll}$ 95° C auf der Düsenseite und 90° C auf der Fahrseite vorgegeben. Zur Erzielung einer hohen Wärmeabfuhr wurde der Zeitpunkt $Z_1$ unter Berücksichtigung der Einspritzzeit von 0,7 s auf den Prozeßpunkt "Beginn Einspritzorgang" gelegt, der Zeitpunkt $Z_2$ ist identisch mit dem Zeitpunkt "Ende der Werkzeugöffnung".

Vor Produktionsbeginn wird das Werkzeug zunächst 20 min mittels Temperiergerät aufgeheizt. Mit dem danach eingeleiteten Anfahrvorgang wird trotz des zu Beginn niedrigeren Temperaturzustandes des Werkzeuges der stationäre Betriebszustand ebenso schnell erreicht wie bei konventioneller Fahrweise.

In der Anfahrphase wurde bereits nach 6 bis 8 Zyklen der Temperaturpunkt $T_{soll}$ - 3 K erreicht, von dem ab zu den jeweiligen Zeitpunkt $Z_1$ der einzelnen Zyklen Temperierimpulse $t_{ann}$ von 0,3 s Länge eingeleitet wurden, um ein gedämpftes Erreichen von $T_{soll}$ zu bewirken. Mit Erreichen von $T_{soll}$ endete die Anfahrphase.

Für die stationäre Betriebsphase werden die gleichen Regelungsparameter n, K1 und K2 wie in Beispiel 1 verwendet. Für die qualitätsgerechte Herstellung der Relaistelle wird eine Zykluszeit von 47 s benötigt. Die Ausschußquote betrug 1,75 % und der spezifische Energieverbrauch lag bei 0,65 kWh/kg.

Beispiel 3

Auf einer Spritzgießmaschine vom Typ Engel 7000/1000 werden Formteile " Luftführung im Motorraum " aus Polypropylen - EPDM mit 20% Talcum für die Automobilindustrie hergestellt.

Die verfahrenstechnischen Parameter sind folgende:

| | |
|---|---|
| - Masse eines Schusses | 1,700 kg |
| - Werkzeugmasse | 5500 kg |
| - Spritzdruck | 760 bar |
| - Einspritzzeit | 5,3 s |
| - Schließkraft | 10000 kN |
| - Nachdruck | 550 bar |
| - Nachdruckzeit | 7 s |

Der Verfahrensablauf ist analog wie im Beispiel 1. Das Spritzgießwerkzeug ist düsenseitig mit zwei Kühlkreisläufen ausgerüstet, deren Solltemperatur $T_{soll}$ mit 45° C vorgegeben ist.

Fahrseitig sind die beiden Schieber das Werkzeuges mit einem Kuhlkreislauf versehen, dessen Solitemperatur $T_{soll}$ mit 45° C vorgegeben ist.

Im Stempelbereich des Werkzeuges sind zwei weitere Kühlkreisläufe angeordnet, deren Solltemperatur $T_{soll}$ mit 55° C vorgegeben ist. In allen Kühlkreisläufen wird als Temperiermedium Brauchwasser mit einer Vorlauftemperatur von 16° C eingesetzt.

Wegen der relativ langen Einspritzzeit und um abzusichern, daß die Schmelze auf die warme Werkzeugkontur gespritzt wird, wurde der Zeitpunkt $Z_1$ auf den Prozeßpunkt "Beginn der Nachdruckzeit" gelegt, eine Kühlung erfolgt also erst nach abgeschlossenem Einspritzvorgang. Als Zeitpunkt $Z_2$ wurde der Prozeßpunkt "Ende Werkzeugöffnungsbewegung" gewählt.

Zu Beginn der Anfahrphase wurde ein Kühlimpuls $t_{init}$ von 8 s Dauer in alle Temperierkreisläufe eingeleitet, ab einer Werkzeugtemperatur von 3 K unterhalb von $T_{soll}$ wurden in jedem Zyklus zum Zeitpunkt $Z_1$ Temperierimpulse $t_{ann}$ von 0,5 s Dauer eingeleitet. Mit Erreichen von $T_{soll}$ endete die Anfahrphase. Für die stationäre Betriebsphase wurden die gleichen Regelungsparameter n, K1 und K2 wie in Beispiel 1 verwendet.

Für die qualitätsgerechte Herstellung der Formteile wird eine Zykluszeit von 56 Sekunden benötigt. Die Ausschußquote betrug 3,75 % und der spezifische Energieverbrauch lag bei 0,7 kWh/kg.

Beispiel 4

Auf einer Spritzgießmaschine vom Typ Engel ES 4400/800 werden Kunststofformteile aus ABS "Ronfalin GG 70" für die Türinnenverkleidung eines PKW hergestellt. Die verfahrenstechnischen Parameter sind folgende:

| | |
|---|---|
| - Masse eines Schusses | 1,310 kg |
| - Werkzeugmasse | 4700 kg |
| - Spritzdruck | 650 bar |
| - Einspritzzeit | 4,5 s |
| - Schließkraft | 8200 kN |
| - Nachdruck | 340 bar |
| - Nachdruckzeit | 7 s |

Der Verfahrensablauf ist analog wie im Beispiel 1. Das Spritzgießwerkzeug ist düsenseitig mit zwei Kühlkreisläufen ausgerüstet, deren Solltemperatur $T_{soll}$ mit 60° C vorgegeben ist. Fahrseitig sind die beiden Schlieber des Werkzeuges mit einem Kühlkreislauf ausgestattet, dessen Solltemperatur $T_{soll}$ mit 50° C vorgegeben ist. Im übrigen Werkzeugbereich sind zwei Kühlkreisläufe angeordnet, deren Solltemperatur mit 64° C vorgegeben ist. In allen Kreisläufen wird als Temperiermedium gesondert aufbereitetes Brauchwasser mit einer Vorlauftemperatur von 32° C eingesetzt, das zur Maschinenkühlung und rücklaufseitig über eine spezielle Wärmerückgewinnungsanlage auch zur Raumheizung in der Heizperiode genutzt wird.

Wegen der relativ langen Einspritzzeit und um abzusichern, daß die Schmelze auf die warme Werkzeugkontur gespritzt wird, wurde der Zeitpunkt $Z_1$ auf den Prozeßpunkt "Beginn Nachdruck" gelegt, eine Kühlung erfolgt also erst nach abgeschlossenem Einspritzvorgang. Auf Grund der großen Formteilmasse und der damit eingebrachten Wärmemenge, sowie auf Grund der relativ hohen Temperiermedientemperatur wurde als Zeitpunkt $Z_2$ der Zeitpunkt $Z_1$ des Folgezyklus gewählt. Im Bedarfsfalle ist somit eine volle Ausnutzung der für einen Zyklus möglichen Kühldauer gegeben.

Zu Beginn der Anfahrphase wurde ein Kühlimpuls $t_{init}$ von 10 s Dauer in alle Temperierkreisläufe eingeleitet, ab einer Werkzeugtemperatur von 3 K unterhalb von $T_{soll}$ wurden in jedem Zyklus zum Zeitpunkt $Z_1$ Temperierimpulse $t_{ann}$ von 1 s Dauer eingeleitet. Mit Erreichen von $T_{soll}$ endete die Anfahrphase. Für die stationäre Betriebsphase wurden die gleichen Regelungsparameter n, K1 und K2 wie in Beispiel 1 verwendet.

Für die qualitätsgerechte Herstellung der Formteile wird eine Zykluszelt von 60 Sekunden benötigt. Die Ausschußquote betrug 3,6 % und der spezifische Energieverbrauch lag bei 0,7 kWh/kg.

Beispiel 5

An diesem Beispiel soll nur die Selbstfindung der Regelgrenzen erläutert werden.

Herstellung eines Automobilteiles, Motorentlüftung aus Polyamid 6.6 mit 20% Glasfaserverstärkung, für den 1,6i Opel, auf einer Spritzgießmaschine Krauss-Maffei 150-620 B.

Verfahrenstechnische Parameter:

| - Werkzeugauslegung | 2-fach |
|---|---|
| - Masse eines Schusses (2 Formteile + Anguß) | 204 g |
| - Werkzeugmasse | 850 kg |
| - Spritzdruck | 920 bar |
| - Zykluszeit | 30 sec |
| - Einspritzzeit | 1,8 sec |
| - Schließkraft | 1300 kN |
| - Nachdruck | 750 bar |
| - Nachdruckzeit | 5,5 sec |

Das Spritzgießwerkzeug ist mit vier Kühlkreisläufen ausgerüstet, die über Temperaturfühler mit der Steuereinhalt gekoppelt sind. Auf dem Rechnerkern der Steuereinheit der Temperieranlage ist die dazugehörige Software implementiert.

Als Werkzeugsolltemperatur $T_{soll}$ werden für die Kühlkreise 1 und 2 (Düsenseite) 60° C und für den Kühlkreis 3 (Fahrseite) 50° C und für den Kühlkreis 4 (Fahrseite) 30° C vorgegeben. Als Kühlmittel fungiert Brauchwasser aus einem geschlossenen betrieblichen Kreislauf mit einer Vorlauftemperatur von 32° C.

Die Werkzeugtemparaturen im Bereich der betreffenden Kühlkreisläufe werden in der geometrischen Mitte zwischen Kühlkanal und Formkontur und in der etwaigen Mitte zwischen Kühlwassereingang und -ausgang des jeweiligen Kreises gemessen.

Zu Beginn der Anfahrphase wird in allen vier Temperierkreisläufen ein Kühlimpuls $t_{init}$ von 5 Sekunden eingeleitet Ab einer Werkzeugtemperatur von 3 K unterhalb der Solltemperatur $T_{soll}$ werden in jedem Zyklus zum Zeitpunkt $Z_1$ Temperierimpulse $t_{ann}$ von 0,3 Sekunden eingeleitet. Die in der stationären Betriebsphase eingeleitete Kühlmittelimpulsdauer $t_E$ beträgt für die Kühlkreise 1 bis 3 9 bis 13 Sekunden und für den Kühlkreis 4 25 Sekunden.

Am Beispiel des Kühlkreises 4 wird die Selbstfindung der Regelgrenzen bei einer zu niedrig angegebenen Solltemperatur $T_{soll}$ beschrieben.

Im ersten Zyklus der Anfahrphase arbeitet das Temperiersystem verfahrensgemäß, d.h., zum Zeitpunkt $Z_1$ ("Beginn Nachdruck") beginnend, erfolgt eine Initialkühlung festgelegter Dauer $t_{init}$ mit der eine erste vollständige Durchspülung der Kühlkreise erzielt wird. Im weiteren Verlauf werden die Kühlkreise 1, 2, 3 und 4 verfahrensgemäß gesteuert, wobei sich die durch die Kreise 1, 2 und 3 beeinflußten Temperaturen den jeweiligen Solltemperaturen $T_{soll}$ zügig annähern, die zum Kreis 4 gehörige Werkzeugtemperatur hingegen zeigt schon nach dem ersten Zyklus einen Wert oberhalb $T_{soll}$ an. Während einer festgelegten Zyklusanzahl $n_{Fehl}$ = 20, wird versucht, im Bereich des Kreises 4 durch ständige Kühlung in der dafür zur Verfügung stehenden Zeit zwischen $Z_1$ ("Beginn Nachdruck") und $Z_2$ ("Ende Werkzeugöffnung") die vorgegebene Solitemperatur $T_{soll}$ zu erreichen. Da das Kühlsystem nicht in der Lage ist, die erforderliche Wärmemenge abzuführen, wird über das Anlagendisplay eine Fehlermeidung ausgegeben. Im Folgezyklus wird die zur Verfügung stehende Kühldauer verlängert, indem der Zeitpunkt $Z_2$ ("Ende Werkzeugöffnung") als zeitliche Begrenzung für die Kühldauer im Zyklus ignoriert wird. Als Temperierdauer steht jetzt die Zeit zwischen dem Signal $Z_1$ des aktuellen Zyklus und dem Signal $Z_1$ des Folgezyklus zur Verfügung. Genügt diese Kühlzeitverlängerung nicht, um die vorgegebene Solltemperatur $T_{soll}$ zu erreichen, so wird die Grenztemperatur $T_{min}$ in Richtung der vorgegebenen Solltemperatur ermittelt. Dazu wird die Werkzeugisttemperatur zu dem Zeitpunkt $Z_D$ "Ende der Werkzeugöffnung" ($Z_D = Z_2$) gemessen und die mittlere Temperaturdifferenz $T_{Diff}$ bei 8 aufeinanderfolgenden Zyklen $n_D$ errechnet. Die Grenztemperatur $T_{min}$ gilt als hinreichend genau, wenn die mittlere Temperaturdifferenz $T_{Diff}$ zum Zeitpunkt $Z_D$ "Ende der Werkzeugöffnung" bei 8 aufeinanderfolgenden Zyklen kleiner als ein festgelegter Temperaturwert $T_K$ = 0,5 K ist.

Da die ermittelte Grenztemperatur $T_{min}$ oberhalb der vorgegebenen Solltemperatur $T_{soll}$ liegt, wird sie um einen Temperaturwert $T_O$ = 2 K nach oben korrigiert, und als neue Solltemperatur $T_{soll-korr}$ eingesetzt und dem Bediener kenntlich gemacht.

29 Zyklen nach Anfahrbeginn betrug die mittlere Temperaturdifferenz 0,48 K und die Werkzeugisttemperatur zum Zeit-

EP 0 690 778 B1

punkt $Z_D$ "Ende der Werkzeugöffnung" 46° C.
Diese Temperatur wurde um den o.g. Wert $T_O$ auf 48° C korrigiert, als neue Solltemperatur $T_{soll-korr}$ in das Temperiersystem eingetragen und dem Bediener kenntlich gemacht.

Vergleichsbeispiel 1

Analog wie im Beispiel 1 werden die Formteile unter Anwendung der konventionellen Temperierung bei folgenden Temperierbedingungen hergestellt:

| - Kühlmethode | 2 zweikreisige Beistelltemperiergeräte |
| - Kühlmedium | Wasser |
| - Kühlmedientemperatur | 2 x 45° C, 2 x 50° C. |

Die erforderliche Zykluszeit betrug dabei 45 Sekunden. Im Dauer betrieb wurde eine Ausschußquote von 3,7 % erreicht und der spezifische Energieverbrauch lag bei 0,72 kWh/kg.

Vergleichsbeispiel 2

Analog wie im Beispiel 2 werden die Formteile unter Anwendung der konventionellen Temperierung bei folgenden Temperierbedingungen hergestellt, wobei das Werkzeug mittels zweier Beistelltemperiergeräte temperiert wird:

| - Kühlmethode | 2 zweikreisige Beistelltemperiergeräte |
| - Kühlmedium | Öl |
| - Kühlmedientemperatur | 2 x 95° C (düsenseitig), |
| - | 2 x 90° C (fahrseitig). |

Die erforderliche Zykluszeit betrug 55 Sekunden. Im Dauerbetrieb wurde eine Ausschußquote von 2,7 % erreicht und der spezifische Energieverbrauch lag bei 0,72 kWh/kg.

Vergleichsbeispiel 3

Analog wie im Beispiel 3 werden die Formteile unter Anwendung der konventionellen Temperierung bei folgenden Temperierbedingungen hergestellt:

| - Kühlmethode | 2 zweikreisige Temperiergeräte |
| - | 2 Kühlkreisläufe mit stetiger Kühlung |
| - Kühlmedium | Wasser |
| - Kühlmedientemperatur | 2 x 50° C, 2 x 60° C |
| | 2 x 14° C. |

Düsenseitig erfolgte im Angußbereich eine stetige Wassenkühlung mit 14° C Vorlauftemperatur über 2 Kühlkreisläufe. Zwei äußere Konturbereiche wurden mittels eines zweikreisigen Temperiergerätes (Temperiermedium Wasser) auf 50° C temperiert. Fahrseitig war ein zweikreisiges Temperiergerät angeschlossen, welches 2 Schieber mittels Wasser auf 50° C temperierte. Ein weiteres zweikreisiges Temperiergerät temperierte den übrigen Stempelbereich mittels Wasser auf 60° C.
Die erforderliche Zykluszeit betrug 60 Sekunden. Im Dauerbetrieb wurde eine Ausschußquote von 4,7 % erreicht und der spezifische Energieverbrauch lag bei 0,81 kWh/kg.

Vergleichsbeispiel 4

Analog wie im Beispiel 4 werden die Formteile unter Anwendung der konventionellen Temperierung bei folgenden Temperierbedingungen hergestellt:

| - Kühlmethode | 4 zweikreisige Temperiergeräte |
|---|---|
| - | 1 Kühlkreislauf mit stetiger Kühlung |
| - Kühlmedium | Wasser |
| - Kühlmedientemperatur | 4 x 55° C, 2 x 50° C, 2 x 60° C |
| | 1 x 14° C. |

Düsenseitig erfolgte im Angußbereich eine stetige Kühlung mit Brauchwasser aus dem betrieblichen Netz, Vorlauftemperatur 14° C.
Die düsenseitigen Konturbereiche des Zweifachwerkzeuges wurden jeweils mit einem zweikreisigem Temperiergerät temperiert. Die Temperatur des Temperiermediums betrug 55° C im Rücklauf. Die Fahrseite wurde ebenfalls mittels zwei zweikreisiger Temperiergeräte (Temperiermedium Wasser) temperiert, wobei die Medientemperatur im Bereich der schwieriger kühlbaren Schieber 50° C und im übrigen Werkzeugbereich 60° C betrug. Die erforderliche Zykluszeit betrug 64 Sekunden. Im Dauerbetrieb wurde eine Ausschußquote von 4,4 % erreicht und der spezifische Energieverbrauch lag bei 0,88 kWh/kg.

Durch die erfindungsgemäße Verfahrensweise wird gegenüber der konventionellen Temperierung eine deutlich verbesserte Prozeßstabilität erreicht. Neben der Einsparung an Temperiergeräten, im Beispiel 4 sind es vier, besteht der wesentliche Vorteil in einer Verkürzung der Zykluszeit. Gemäß den Beispielen liegt diese zwischen 4,5 und 14 %. Dadurch wird eine erhebliche Produktivitätssteigerung erreicht. Auch die Ausschußquote konnte beträchtlich gesenkt werden. In den Beispielen liegen die erzielten Einsparungen zwischen 18 und 35 %. Insgesamt ergibt sich dadurch auch eine Senkung des spezifischen Energieverbrauchs, die zwischen 10 und 20 % liegt.
Eine weitere Energieeinsparung ergab sich bei Beispiel 4 aus der Tatsache, daß das gesondert aufbereitete Brauchwasser, das zur Maschinenkühlung und über eine Wärmeaufbereitungsanlage zur Raumheizung genutzt wird, gleichzeitig zur Werkzeugtemperierung verwendet wurde. Dadurch wurde es möglich, die durch die Schmelze in das Werkzeug eingebrachte Wärmemenge, die normalerweise als Verlustwärme anfällt, über das Temperiermedium zum großen Teil in den betrieblichen Brauchwasserkreislauf einzubringen und während der Heizperiode für die Raumheizung zu nutzen.

**Patentansprüche**

1. Verfahren zur Temperierung von Formwerkzeugen für die Kunststoffverarbeitung, insbesondere Spritzgießwerkzeugen, bei dem die gemessene Werkzeugtemperatur mit einem vorgegebenen Sollwert verglichen wird, und in Abhängigkeit vom Ergebnis des Ist-Sollwert-Vergleiches die Durchflußmenge des Temperiermediums in den Kühlkreisläufen verändert wird, und der Temperierprozeß in zwei Phasen, eine Anfahrphase und eine stationäre Betriebsphase, mit jeweils unterschiedlichen Temperierbedingungen, getrennt wird, wobei die Anfahrphase nach dem erstmaligen Erreichen oder Überschreiten der vorgegebenen Werkzeugsolltemperatur beendet ist, und während der gesamten Zyklusdauer kontinuierlich die Werkzeugtemperatur an dem für den betreffenden Kühlkreislauf, thermisch sowohl von der eingespritzten Schmelze als auch der Kühlung gleichwertig beaufschlagten Ort gemessen wird, wobei dieser Ort sich im Bereich der geometrischen Mitte zwischen Formteilkontur und Kühlkanälen bzw. Kühlfläche und im Bereich der Mitte zwischen Kühlwassereingang und Kühlwasserausgang in einem hinreichend großen Abstand zur Formteilkontur befindet, und zum Zeitpunkt $Z_1$, der durch ein Signal der Maschinenablaufsteuerung festgelegt wird, ein Kühlmittelimpuls, der die Temperierung in den zurückliegenden Zyklen berücksichtigt, in zeitlicher Nähe des Einspritzvorganges eingeleitet wird, um im Zeitbereich der größten Temperaturdifferenz zwischen eingespritzter Schmelze und Kühlkanal die erforderliche Wärmeableitung zu bewirken und weitere Kühlmittelimpulse als Resultat eines bis zu einem Zeitpunkt $Z_2$ stattfindenden Soll-Ist-Vergleichs bei Überschreitung der vorgegebenen Solltemperatur eingeleitet werden, wobei der Zeitpunkt $Z_2$ durch ein Signal der Maschinenablaufsteuerung festgelegt wird, das zu einem definierten Zeitpunkt in zeitlicher Nähe des Zyklusendes ausgelöst wird.

2. Verfahren nach Anspruch 1, dadurch gekennzeichnet, daß während der Anfahrphase im ersten Zyklus zum Zeitpunkt $Z_1$ beginnend eine Initialkühlung $t_{init}$ mit festgelegter Dauer erfolgt, um eine erste vollständige Durchspülung des betreffenden Kühlkreislaufes zu erzielen und beim Erreichen eines definierten Abstandes der mittleren Werkzeugtemperatur zur vorgegebenen Solltemperatur im Folgezyklus zum Zeitpunkt $Z_1$ ein Festkühlimpuls $t_{ann}$ geringerer zeitlicher Dauer eingeleitet wird, wobei der Kühlimpuls $t_{ann}$ in allen nachfolgenden Zyklen bis zur erstmaligen Überschreitung der vorgegebenen Solltemperatur eingeleitet wird und ein gedämpftes Annähern der mittleren Werkzeugtemperatur an die gewählte Solltemperatur gewährleistet.

3. Verfahren nach Anspruch 1, dadurch gekennzeichnet, daß während der Anfahrphase bei Vorgabe einer Solltemperatur, die unter der ermittelten Isttemperatur liegt, in allen nachfolgenden Zeitpunkten $Z_1$ und $Z_2$ solange eine ständige Kühlung erfolgt, bis die gemessene Isttemperatur die vorgegebene Solltemperatur erstmalig unterschreitet, wobei nach Unterschreitung der Solltemperatur die Anfahrphase mit der Einleitung des Kühlimpulses $t_{ann}$ zum Zeitpunkt $Z_1$ des auf die erste Unterschreitung folgenden Zyklus fortgesetzt wird und mit der erneuten Überschreitung der Solltemperatur beendet wird.

4. Verfahren nach einem der Ansprüchen 1 bis 3, dadurch gekennzeichnet, daß während der stationären Betriebsphase nach dem Zeitpunkt $Z_2$ des jeweiligen Zyklus mittels eines Rechners das arithmetische Mittel der Gesamtdauer der Kühlmittelimpulse aus der Anzahl n der vorangegangenen Zyklen errechnet wird, mit einem Faktor K1 bewertet wird und als Wert $t_E$ die Dauer des im Folgezyklus zum Zeitpunkt $Z_1$ einzuleitenden Kühlmittelimpulses bestimmt wird und nach Einleitung dieses Kühlmittelimpulses im Ergebnis des kontinuierlich durchgeführten Soll-Ist-Vergleiches für die Dauer der Solltemperaturüberschreitung die Einleitung weiterer temperaturabhängiger Kühlmittelimpulse bis zum Zeitpunkt $Z_2$ des aktuellen Zyklus erfolgt, deren Gesamtdauer je Zyklus durch die errechnete maximale Gesamtdauer $t_{max}$ begrenzt ist.

5. Verfahren nach Anspruch 4, dadurch gekennzeichnet, daß die Zeitdauer des Kühlimpulses $t_E$ nach folgender Berechnungsformel

$$t_E = \frac{K1\,(j)}{n} * \sum_{i=1}^{n} (t_{Ei} + t_{Vi}) \tag{I}$$

ermittelt wird, wobei

n      die vorgegebene Anzahl von aufeinanderfolgenden Zyklen deren Gesamtkühldauer nach erstmaliger Überschreitung der vorgegebenen Werkzeugsolltemperatur in die Berechnung von $t_E$ einbezogen werden soll,

$t_{Ei}$      der für den Zyklus i der n Zyklen errechnete Kühlimpuls,

$t_{Vi}$      die Summe der temperaturabhängigen Kühlimpulse des Zyklus i der n Zyklen,

j      die Zykluszahl nach Beginn der Phase des stationären Betriebes und

K1(j)      die von j abhängige maschinen- und verfahrensabhängige Größe, die zur Bewertung der mittleren Kühlzeit aus den letzten n Zyklen dient und die folgenden Bedingungen genügt:

$$K1(j) = a_0 + a_1 * j \qquad \text{für } j \leq n$$

$$K1(j) = a_2 \qquad \text{für } j > n$$

$$K1(j) < 1, \; K1(j+1) \geq K1(j) \qquad \text{für alle } j$$

$$a_0, a_1, a_2 > 0,$$

das heißt, $K_1(j)$ genügt einer Geradengleichung für $j \leq n$ mit $a_1$ als Anstieg, $a_0$ als konstantem Glied und im Bereich $j \leq n+1$ streng monoton wachsendem Verlauf, für $j > n$ ist $K_1(j)$ konstant $a_2$, wobei gilt, $a_2 > a_0 + a_1 * j$ für $j \leq n$ und gewährleistet ist, daß die Summe der Kühlimpulse bis zum Zyklus n schwächer gewichtet in die Berechnung von $t_E$ eingeht als nach Erreichen von n,

bedeuten und folgende Anfangsbedingungen ab Zyklus 1 der stationären Phase für die Berechnung gelten:

(1) $t_{Ei} = t_{ann}$
(2) Die Berechnung von (I) erfolgt für $j < n$, indem n durch j ersetzt wird.

6. Verfahren nach Anspruch 4, dadurch gekennzeichnet, daß die maximal mögliche Summe der temperaturabhängigen Kühlimpulse nach folgender Berechnungsformel

$$t_{max} = K2 * t_E$$

ermittelt wird, wobei gilt:

K2     eine Konstante, die der Bedingung

$$(1 - K1(j)) < K2 \leq 3, \qquad K2 = const. \text{ für alle } j$$

genügt und

$$t_E = \frac{K1\,(j)}{n} * \sum_{i=1}^{n} (t_{Ei} + t_{Vi})$$

bedeuten.

7. Verfahren nach einem der Ansprüche 1 bis 6, dadurch gekennzeichnet, daß als Zeitpunkt $Z_1$ der Beginn der Nachdruckzeit und als Zeitpunkt $Z_2$ das Ende der Werkzeugöffnung gewählt werden.

8. Verfahren nach einem der Ansprüche 1 bis 6, dadurch gekennzeichnet, daß als Zeitpunkt $Z_1$ der Beginn des Einspritzvorganges und als Zeitpunkt $Z_2$ das Ende der Werkzeugöffnung gewählt werden.

9. Verfahren nach einem der Ansprüche 1 bis 6, dadurch gekennzeichnet, daß der Zeitpunkt $Z_1$ und der Zeitpunkt $Z_2$ durch die gleichen Signale der Maschinenablaufsteuerung festgelegt werden, wobei $Z_2$ mit dem Signal $Z_1$ des Folgezyklus identisch ist.

10. Verfahren nach einem der Ansprüche 1 bis 9, dadurch gekennzeichnet, daß nach einer festgelegten Anzahl $n_{Fehl}$ von Maschinenzyklen, in denen die betreffende Werkzeugisttemperatur ständig oberhalb bzw. ständig unterhalb der vorgegebenen Solltemperatur $T_{soll}$ geblieben ist, eine Fehlermeldung abgesetzt wird, in deren Folge durch Prüfung der mittleren Temperaturdifferenz $T_{Diff}$ zu einem definierten Zeitpunkt $Z_D$ im Maschinenzyklus bei $n_D$ aufeinanderfolgenden Zyklen die Grenztemperatur in Richtung der vorgegebenen Solltemperatur ermittelt wird, wobei die Grenztemperatur hinreichend genau ermittelt ist, wenn die mittlere Temperaturdifferenz $T_{Diff}$ zum Zeitpunkt $Z_D$ bei $n_D$ aufeinanderfolgenden Zyklen nicht größer als ein Temperaturwert $T_K$ ist.

11. Verfahren nach einem Ansprüche 1 bis 10, dadurch gekennzeichnet, daß für den Fall, wenn die ermittelte Grenztemperatur unterhalb der vorgegebenen Solltemperatur $T_{soll}$ liegt, die Grenztemperatur um einen Temperaturwert $T_U$ nach unten korrigiert und als neue Solltemperatur $T_{soll-korr}$ eingesetzt und der verfahrensgebundene Regelparameter $t_{ann}$ mittels eines Faktors von 0,2 bis 0,8 angepaßt wird.

12. Verfahren nach einem der Ansprüche 1 bis 10, dadurch gekennzeichnet, daß für den Fall, wenn die ermittelte Grenztemperatur oberhalb der vorgegebenen Solltemperatur $T_{soll}$ liegt, die Kühldauer im Zyklus verlängert wird, wobei das die Temperierung beendende Signal $Z_2$ aus der Ablaufsteuerung der Spritzgießmaschine ignoriert und gleich $Z_1$ des Folgezyklus gesetzt wird.

13. Verfahren nach Anspruch 12, dadurch gekennzeichnet, daß bei nicht ausreichender Kühlzeitverlängerung, die ermittelte Grenztemperatur um einen Temperaturwert $T_O$ nach oben korrigiert und als Solltemperatur $T_{soll-korr}$ eingesetzt wird.

14. Verfahren nach einem der Ansprüche 1 bis 13, dadurch gekennzeichnet, daß für die Zyklusanzahl $n_{Fehl}$ ein Wert zwischen 10 und 30 festgelegt wird.

15. Verfahren nach einem der Ansprüche 1 bis 14, dadurch gekennzeichnet, daß für die Zyklusanzahl $n_D$ ein Wert zwischen 2 und 30 festgelegt wird.

16. Verfahren nach einem der Ansprüche 1 bis 15, dadurch gekennzeichnet, daß der Temperaturwert $T_K$ in einem Bereich zwischen größer 0 und kleiner 1 K liegt.

17. Verfahren nach einem der Ansprüche 1 bis 16, dadurch gekennzeichnet, daß der Temperaturwert $T_U$ in einem Bereich von 0,5 bis 2 K liegt.

18. Verfahren nach einem der Ansprüche 1 bis 17, dadurch gekennzeichnet, daß der Temperaturwert $T_O$ in einem Bereich von 1 bis 5 K liegt.

19. Anlage zur Durchführung des Verfahrens nach einem der vorhergehenden Ansprüche, mit einem an den Aufspannplatten einer Spritzgießmaschine befestigtem Spritzgießwerkzeug, das einen oder mehrere Temperierkreisläufe aufweist, deren Durchflußmenge regulierbar und in deren Einflußbereich im Spritzgießwerkzeug je Temperierkreislauf ein Thermosensor angeordnet ist, und einem Steuergerät (3) bestehend aus einer Anpaßstufe zur Anpassung der thermischen Signale entsprechend der gewählten Sensoren und Übertragungsmittel an einen nachgeschalteten Analog-Digital-Umwandler ADU zur Umwandlung der thermischen Signale in elektrische Signale, einem Rechnerkern CPU zur Errechnung der erforderlichen Durchflußdauer des Temperiermediums im jeweiligen Kühlkreislauf ($K_1$ .... $K_m$) in Abhängigkeit vom Temperiergeschehen der zurückliegenden Zyklen und der momentan gemessenen Temperatur und zur Ausgabe von Schaltsignalen zu Beginn und Ende des Temperiermediendurchflusses an das Stellglied ($M_1$ .... $M_m$) des jeweiligen Temperierkreislaufes, einer Eingabeeinheit zur Eingabe von Signalen aus der Ablaufsteuerung der Spritzgießmaschine (1), einer Ausgabeeinheit für die Bedienerführung und einer Schnittstelle zur Druckerprotokollierung des Temperiergeschehens, wobei das Steuergerät (3) in den Spritzgießvorgang, die Temperaturmessung und die Temperiermedienstromregulierung eingebunden ist.

## Claims

1. Process for tempering molding tools for processing plastics, in particular injection molding tools, in which the measured tool temperature is compared with a preset nominal value and the amount of through-flow of the tempering medium in the cooling circulations is changed depending on the result of the actual-should be value comparison, and
the tempering process is divided in two phases, a start-up phase and a stationary operating phase each having different tempering conditions, whereby the start-up phase is completed after the preset nominal tool temperature is reached or exceeded for the first time, and the tool temperature is continuously measured during the entire cycle duration at the site equally acted upon thermally for the respective cooling circulation by both the injected melt and the cooling, whereby said site is located within the range of the geometric center between the molded part contour and the cooling ducts or cooling surface, and within the range of the center between the cooling water inlet and the cooling water outlet, with a sufficiently large spacing from the molded part contour, and at time $Z_1$, the latter being fixed by a signal of the machine sequence control, a cooling medium impulse, the latter taking into account the tempering in the preceding cycles, is induced close in time to the injection process in order to effect the required heat dissipation within the time range of the greatest temperature difference between the injected melt and the cooling duct, and further cooling medium impulses are induced as a result of should be-actual comparison taking place up to a time $Z_2$ if the preset nominal temperature is exceeded, whereby the time $Z_2$ is fixed by a signal of the machine sequence control, such signal being triggered at a defined time close in time to the end of the cycle.

2. Process according to claim 1, characterized in that during the start-up phase, an initial cooling $t_{init}$ with a fixed duration takes place in the first cycle starting at time $Z_1$ in order to achieve a first complete flushing of the respective cooling circulation, and upon reaching of a defined spacing of the mean tool temperature from the preset nominal temperature, a fixed cooling impulse $t_{ann}$ of a shorter time duration is induced in the subsequent cycle at time $Z_1$, whereby the cooling impulse $t_{ann}$ is induced in all subsequent cycles until the preset nominal temperature is exceeded for the first time, and a dampened approximation of the mean tool temperature to the selected nominal temperature is assured.

3. Process according to claim 1, characterized in that during the start-up phase, with presetting of a nominal temperature below the determined actual temperature, continuous cooling takes place at all subsequent times $Z_1$ and $Z_2$ until the measured actual temperature falls short of the preset nominal temperature for the first time, whereby upon falling short of the nominal temperature, the start-up phase is continued with the induction of the cooling impulse

$t_{ann}$ at the time $Z_1$ of the cycle following the first falling short, and completed when the nominal temperature is exceeded again.

4. Process according to any one of claims 1 to 3, characterized in that during the stationary operating phase following the time $Z_2$ of the respective cycle, the arithmetic mean of the total duration of the cooling medium impulses is computed by means of a computer based on the number n of the preceding cycles, evaluated with a factor K1, and the duration of the cooling medium impulse to be induced in the following cycle at time $Z_1$ is determined as value $t_E$, and upon induction of said cooling medium impulse, the induction of further temperature-dependent cooling medium impulses takes place up to time $Z_2$ of the current cycle as the result of the continuously executed should be-actual comparison, such further impulses being induced for the duration over which the nominal temperature is exceeded, their total duration per cycle being limited by the computed maximum duration $t_{max}$.

5. Process according to claim 4, characterized in that the time duration of the cooling impulse $t_E$ is determined according to the following calculation formula:

$$t_E = \frac{K1(j)}{n} * \sum_{i=1}^{n} (t_{Ei} + t_{Vi}) \qquad (I)$$

where

n      is the preset number of successive cycles whose total cooling duration is to be included in the calculation of $t_E$ after the preset nominal tool temperature has been exceeded for the first time;

$t_{Ei}$      is the cooling impulse computed for cycle i after n cycles;

$t_{Vi}$      is the sum of the temperature-dependent cooling impulses of cycle i of the n cycles;

j      is the number of cycles after the phase of stationary operation has started; and

K1(j)      is the machine- and process-dependent quantity depending on j, which serves for evaluating the mean cooling time from the last n cycles and which satisfies the following conditions:

$$K1(j) = a_0 + a_1 * j \qquad \text{for } j \leq n$$

$$K1(j) = a_2 \qquad \text{for } j > n$$

$$K1(j) < 1, K1(j+1) \geq K1(j) \qquad \text{for all j's}$$

$$a_0, a_1, a_2 > 0,$$

which means, $K_1(j)$ satisfies a straight-line equation for $j \leq n$, with $a_1$ as increase, $a_0$ as a constant member, and a strictly monotonously growing development within range $j \leq n + 1$, for $j > n$, $K_1(j)$ is constantly $a_2$, whereby the following applies: $a_2 > a_0 + a_1 * j$ for $j \leq n$; and that it is assured that the sum of the cooling impulses up to cycle n is included less weighted in the calculation of $t_E$ than it is after n has been reached;

and that the following starting conditions apply to the calculation starting with cycle 1 of the stationary phase:

(1) $t_{Ei} = t_{ann}$

(2) The calculation of (I) is made for $j < n$ by substituting j for n.

6. Process according to claim 4, characterized in that the maximally possible sum of temperature-dependent cooling impulses is determined according to the following calculation formula:

$$t_{max} = K2 * t_E,$$

whereby the following applies:

K2     is a constant satisfying the condition

$$(1 - K1(j)) < K2 \leq 3, \qquad K2 = \text{const. for all j's;}$$

and

$$t_E = \frac{K1(j)}{n} * \sum_{i=1}^{n} (t_{Ei} + t_{Vi})$$

**7.** Process according to any one of claims 1 to 6, characterized in that the start of the dwell pressure time is selected as time $Z_1$, and the end of tool opening is selected as time $Z_2$.

**8.** Process according to any one of claims 1 to 6, characterized in that the start of the injection process is selected as time $Z_1$, and the end of the tool opening is selected as time $Z_2$.

**9.** Process according to any one of claims 1 to 6, characterized in that the time $Z_1$ and the time $Z_2$ are fixed by the same signals of the machine sequence control, whereby $Z_2$ is identical with the signal $Z_1$ of the subsequent cycle.

**10.** Process according to any one of claims 1 to 9, characterized in that following a fixed number $n_{error}$ of machine cycles in which the respective actual machine temperature remained constantly above or constantly below the pre-set nominal temperature $T_{nom}$, an error message is transmitted, as a consequence of which the limit temperature is determined in the direction of the preset nominal temperature by testing the mean temperature difference $T_{diff}$ at a defined time $Z_D$ in the machine cycle at $n_D$ successive cycles, whereby the limit temperature is determined with sufficient accuracy if the mean temperature difference $T_{diff}$ at time $Z_D$ at $n_D$ successive cycles is not greater than a temperature value $T_K$.

**11.** Process according to any one of claims 1 to 10, characterized in that in case the determined limit temperature is below the preset nominal temperature $T_{nom}$, the limit temperature is corrected downwardly by a temperature value $T_U$ and $T_{nom-corr}$ is used as the new nominal temperature, and the process-linked control parameter $t_{ann}$ is adapted by means of a factor of 0.2 to 0.8.

**12.** Process according to any one of claims 1 to 10, characterized in that in case the determined limit temperature is above the preset nominal temperature $T_{nom}$, the cooling duration in the cycle is extended, whereby the signal $Z_2$ from the sequence control of the injection molding machine, said signal terminating the tempering, is ignored and equated with $Z_1$ of the following cycle.

**13.** Process according to claim 12, characterized in that with insufficient extension of the cooling time duration, the determined limit temperature is corrected upwardly by a temperature value $T_O$ and $T_{nom-corr}$ is used as the nominal temperature.

**14.** Process according to any one of claims 1 to 13, characterized in that a value of between 10 and 30 is fixed for the cycle number $n_{error}$.

**15.** Process according to any one of claims 1 to 14, characterized in that a value between 2 and 30 is fixed for the cycle number $n_D$.

**16.** Process according to any one of claims 1 to 15, characterized in that the temperature value $T_K$ is in a range betwenn greater than 0 and smaller than 1 K.

**17.** Process according to any one of claims 1 to 16, characterized in that the temperature value $T_U$ is in a range between 0.5 to 2 K.

**18.** Process according to any one of claims 1 to 17, characterized in that the temperature value $T_O$ is in a range of 1 to 5 K.

**19.** Device for carrying out the process according to any one of the precedingclaims, with an injection molding tool fastened on the clamp plates of an injection molding machine, said tool having one or a plurality of tempering circulations of which the amountof through-flow is controllable, and in whose range of influence in the injection molding tool, a thermosensor is arranged for each tempering circulation, and a controller (3) consisting of an adapter stage for adapting the thermal signals in accordance with the selected sensors and transmission means to an after-connected analog-to-digital converter (ADC) for converting the thermal signals into electric signals; a central processing unit (CPU) for computing the required duration of through-flow of the tempering medium in the respective cooling circulation ($K_1$ ... $K_m$) in dependence on the tempering events in the preceding cycles and on the instantaneously measured temperature, and for transmitting switching signals at the start and end of the tempering medium through-flow to the control element ($M_1$ ... $M_m$) of the respective tempering circulation; an input unit for the input of signals from the sequence control of the injection molding machine (1); an output unit for guiding the operator; and an interface for recording the temperering events on a printer, whereby the controller (3) is integrated in the injection molding process, the temperature measurement and the tempering medium flow control.

## Revendications

**1.** Procédé pour l'équilibrage de la température d'outils de formage pour le traitement du plastique, en particulier d'outils d'injection,
la température mesurée de l'outil est comparée avec une valeur de consigne prédéfinie, et le débit de passage de l'agent d'équilibrage de température dans les circuits de refroidissement est modifié en fonction du résultat de la comparaison valeur réelle/valeur de consigne, et le procédé d'équilibrage de température est séparé en deux phases, une phase de démarrage et une phase d'exploitation stationnaire, avec des conditions d'équilibrage de température respectivement différentes, la phase de démarrage étant achevée après avoir atteint pour la première fois ou dépassé la température de consigne prédéfinie pour l'outil, et la température de l'outil est mesurée pendant toute la durée du cycle de façon continue à l'endroit sollicité au niveau thermique par le bain injecté comme par le refroidissement pour le circuit de refroidissement concerné, cet endroit se trouvant dans la zone du centre géométrique entre le contour de la pièce moulée et les canaux de refroidissement ou la surface de refroidissement et dans la zone du centre entre l'entrée de l'eau de refroidissement et la sortie de l'eau de refroidissement à une distance suffisamment grande du contour de la pièce moulée, et une impulsion du réfrigérant, qui tient compte de l'équilibrage de température dans les cycles précédents, étant déclenchée à proximité dans le temps de l'opération d'injection à l'instant $Z_1$ qui est déterminé par un signal de la commande séquentielle de machine afin d'entraîner l'évacuation de chaleur nécessaire dans la plage de temps de l'écart de température maximal entre le bain injecté et le canal de refroidissement et d'autres impulsions du réfrigérant étant déclenchées comme résultat d'une comparaison valeur de consigne/valeur réelle effectuée jusqu'à un instant $Z_2$ en cas de dépassement de la température de consigne prédéfinie, l'instant $Z_2$ étant déterminé par un signal de la commande séquentielle de machine qui est déclenché à un instant défini à proximité dans le temps de la fin du cycle.

**2.** Procédé selon la revendication 1, caractérisé en ce que, pour commencer, un refroidissement initial $t_{init}$ avec une durée fixée intervient pendant la phase de démarrage dans le premier cycle à l'instant $Z_1$ pour obtenir un premier lavage complet du circuit de refroidissement concerné et une impulsion de refroidissement fixe $t_{ann}$ de durée inférieure est induite dans le cycle consécutif à l'instant $Z_1$ lorsqu'on atteint un écart défini entre la température moyenne de l'outil et la température de consigne prédéfinie, l'impulsion de refroidissement $t_{ann}$ étant induite dans tous les cycles consécutifs jusqu'au premier dépassement de la température de consigne prédéfinie et garantissant une approche modérée de la température moyenne de l'outil par rapport à la température de consigne choisie.

**3.** Procédé selon la revendication 1, caractérisé en ce que, pendant la phase de démarrage, lorsqu'on prédéfinit une température de consigne qui est inférieure à la température réelle mesurée, on a un refroidissement constant à tous les instants consécutifs $Z_1$ et $Z_2$ jusqu'à ce que la température réelle mesurée soit inférieure pour la première fois à la température de consigne prédéfinie, la phase de démarrage étant poursuivie après le sous-dépassement de la température de consigne avec l'amorçage de l'impulsion de refroidissement $t_{ann}$ à l'instant $Z_1$ du cycle suivant le premier sous-dépassement et étant achevée avec le nouveau dépassement de la température de consigne.

**4.** Procédé selon l'une quelconque des revendications 1 à 3, caractérisé en ce que, pendant la phase d'exploitation stationnaire et après l'instant $Z_2$ du cycle concerné, la moyenne arithmétique de la durée globale des impulsions du réfrigérant est calculée au moyen d'un ordinateur à partir du nombre n des cycles précédents, est évaluée avec un facteur K1, la durée de l'impulsion du réfrigérant à amorcer dans le cycle consécutif à l'instant $Z_1$ est calculée comme valeur $t_E$ et, après l'amorçage de cette impulsion du réfrigérant et en conclusion de la comparaison valeur de consigne/valeur réelle effectuée de façon continue pour la durée du dépassement de la température de consigne, l'amorçage d'autres impulsions du réfrigérant dépendantes de la température intervient jusqu'à l'instant $Z_2$ du

cycle actuel, impulsion dont la durée globale par cycle est limitée par la durée globale $t_{max}$ maximale calculée.

5. Procédé selon la revendication 4, caractérisé en ce que la durée de l'impulsion de refroidissement $t_E$ est calculée selon la formule

$$t_E = \frac{K1(j)}{n} * \sum_{i=1}^{n} (t_{Ei} + t_{Vi}) \qquad (I)$$

dans laquelle :

- n désigne le nombre prédéfini de cycles successifs dont la durée globale de refroidissement après le premier dépassement de la température de consigne prédéfinie de l'outil doit être intégrée dans le calcul de $t_E$ ,

- $t_{Ei}$ désigne l'impulsion de refroidissement calculée pour le cycle i des n cycles,

- $t_{Vi}$ est la somme des impulsions de refroidissement, dépendantes de la température, du cycle i des n cycles,

- j est le nombre de cycles après le début de la phase de l'exploitation stationnaire et

- K1(j) est la grandeur dépendante de la machine et du procédé, variable avec j, qui sert à évaluer le temps de refroidissement moyen à partir des n derniers cycles et satisfait aux conditions suivantes :

$$K1(j) = a_0 + a_1 * j \qquad \text{pour } j \leq n$$

$$K1(j) = a_2 \qquad \text{pour } j > n$$

$$K1(j) < 1, \ K1(j+1) \geq K1(j) \qquad \text{pour tous les } j$$

$$a_0, a_1, a_2 > 0,$$

de telle sorte que $K_1$ (j) satisfait à une équation linéaire pour $j \leq n$ avec $a_1$ comme accroissement, $a_0$ comme terme constant, et dans la plage $j \leq n + 1$ courbe croissante fortement monotone, pour j> n $K_1$ (j) est $a_2$ invariable, pour lequel on a $a_2 > a_0 + a_1 * j$ pour $j \leq n$ et, ainsi le total des impulsions de refroidissement intervient dans le calcul de $t_E$ jusqu'au cycle n avec une pondération plus faible qu'après avoir atteint n

les conditions initiales suivantes étant appliquées au calcul à partir du cycle 1 de la phase stationnaire :

(1) $t_{Ei} = t_{ann}$
(2) pour j < n, le calcul de (I) s'effectue avec n remplacé par j.

6. Procédé selon la revendication 4, caractérisé en ce que la somme maximale possible des impulsions de refroidissement dépendantes de la température est calculée selon la formule

$$t_{max} = K2 * t_E$$

dans laquelle

K2   est une constante qui répond à la condition

$$(1 - K1 (j)) < K2 \leq 3, \ K2 = \text{constante pour tous les } j$$

et

$$t_E = \frac{K1(j)}{n} * \sum_{i=1}^{n} (t_{Ei} + t_{Vi})$$

7. Procédé selon l'une quelconque des revendications 1 à 6, caractérisé en ce qu'on choisit comme instant $Z_1$ le début du temps de maintien en pression et comme instant $Z_2$ la fin de l'ouverture de l'outil.

8. Procédé selon l'une quelconque des revendications 1 à 6, caractérisé en ce qu'on choisit comme instant $Z_1$ le début de l'opération d'injection et comme instant $Z_2$ la fin de l'ouverture de l'outil.

9. Procédé selon l'une quelconque des revendications 1 à 6, caractérisé en ce que l'instant $Z_1$ et l'instant $Z_2$ sont définis par les mêmes signaux de la commande séquentielle de machine, $Z_2$ étant identique au signal $Z_1$ du cycle consécutif.

10. Procédé selon l'une quelconque des revendications 1 à 9, caractérisé en ce que, après un nombre $n_{erreur}$ défini de cycles machine, au cours desquels la température réelle concernée de l'outil est restée constamment au-dessus ou constamment au-dessous de la température de consigne $T_{théorique}$ prédéfinie, on transmet un message d'erreur à la suite duquel la température limite dans le sens de la température de consigne prédéfinie est calculée après examen de l'écart de température $T_{écart}$ moyen à un instant $Z_D$ défini par le cycle machine pour $n_D$ cycles consécutifs, la température limite étant calculée avec suffisamment de précision, lorsque l'écart de température $T_{écart}$ moyen à l'instant $Z_D$ n'est pas supérieur à une valeur de température $T_K$ pour $n_D$ cycles successifs.

11. Procédé selon l'une quelconque des revendications 1 à 10, caractérisé en ce que, pour le cas où la température limite calculée est inférieure à la température de consigne $T_{théorique}$ prédéfinie, la température limite est corrigée vers le bas d'une valeur de température $T_U$, est utilisée comme nouvelle température de consigne $T_{théorique-corrigée}$ et le paramètre de réglage $T_{ann}$ lié au procédé est adapté au moyen d'un facteur de 0,2 à 0,8.

12. Procédé selon l'une quelconque des revendications 1 à 10, caractérisé en ce que la durée de refroidissement est prolongée dans le cycle pour le cas où la température limite calculée est supérieure à la température de consigne $T_{théorique}$ prédéfinie, le signal $Z_2$ terminant l'équilibrage de température et provenant de la commande séquentielle de la machine d'injection étant ignoré et égalé à $Z_1$ du cycle consécutif.

13. Procédé selon la revendication 12, caractérisé en ce que, dans le cas d'un allongement insuffisant du temps de refroidissement, la température limite calculée est corrigée vers le haut d'une valeur de température $T_o$ et est utilisée comme température de consigne $T_{théorique-corrigée}$.

14. Procédé selon l'une quelconque des revendications 1 à 13, caractérisé en ce qu'une valeur entre 10 et 30 est fixée pour le nombre de cycles $n_{erreur}$.

15. Procédé selon l'une quelconque des revendications 1 à 14, caractérisé en ce qu'une valeur comprise entre 2 et 30 est fixée pour le nombre de cycles $n_D$ .

16. Procédé selon l'une quelconque des revendications 1 à 15, caractérisé en ce que la valeur de température $T_K$ se situe dans une plage comprise entre > 0 et < 1K.

17. Procédé selon l'une quelconque des revendications 1 à 16, caractérisé en ce que la valeur de température $T_U$ se situe dans une plage allant de 0,5 à 2K.

18. Procédé selon l'une quelconque des revendications 1 à 17, caractérisé en ce que la valeur de température $T_o$ se situe dans une plage allant de 1 à 5K.

19. Appareil pour l'application du procédé selon l'une quelconque des revendications précédentes, avec un outil d'injection fixé sur les plateaux de montage d'une machine d'injection, qui présente un ou plusieurs circuits d'équilibrage de température dont le débit de passage est réglable et dans la zone d'influence desquels on dispose un capteur thermique dans l'outil d'injection par circuit d'équilibrage de température, et avec un appareil de commande (3) comprenant un niveau d'adaptation pour l'adaptation des signaux thermiques en fonction des capteurs et moyens de transmission choisis à un convertisseur analogique-numérique ADU placé en aval pour la conversion des signaux thermiques en signaux électriques, un noyau d'ordinateur CPU pour le calcul de la durée de passage nécessaire de l'agent d'équilibrage de température dans le circuit de refroidissement concerné ($K_1...K_m$) en fonction de l'équilibrage de température des cycles précédents et de la température instantanée mesurée et pour la sortie de signaux de commutation au début et à la fin du passage de l'agent d'équilibrage de température sur l'élément de réglage ($M_1...M_m$) du circuit d'équilibrage de température concerné, une unité d'entrée pour l'entrée de signaux provenant de la commande séquentielle de la machine d'injection (1), une unité de sortie pour le guidage de l'opérateur et une interface pour la consignation de protocoles d'imprimante concernant l'équilibrage de température, l'appareil de commande (3) étant intégré dans l'opération d'injection, la mesure de la température et la régulation du flux de l'agent d'équilibrage de température.

Ansteuerung Magnetventile

K$_1$   K$_m$

M$_1$   M$_m$

2

Ablaufsteuerung
Spritzgießmaschine

1

Thermoelemente
Th$_1$ ... Th$_m$

Signale z$_1$,z$_2$

Anpaßstufe          A D U          C P U

Eingabetastatur

Ausgabedisplay

3          Figur 1

Figur 2